# EUROPEAN PATENT APPLICATION

(11) **EP 4 742 683 A1**
(43) Date of publication of application: **13.05.2026**
(21) Application number: 24852019.9
(22) Date of filing: 04.06.2024
(51) Int. Cl.: H04N 21/466, H04N 21/442, H04N 21/45, H04N 21/482, H04N 21/431, G06N 3/045, G06F 16/73

(54) **ELECTRONIC DEVICE AND OPERATION METHOD THEREOF**

(30) Priority: 07.08.2023 KR 20230103125
(71) Applicant: Samsung Electronics Co., Ltd., Suwon-si, Gyeonggi-do 16677 (KR)
(72) Inventor: LEE, Daehyun, Suwon-si, Gyeonggi-do 16677 (KR); JEONG, Yoonyoung, Suwon-si, Gyeonggi-do 16677 (KR)
(74) Representative: Appleyard Lees IP LLP
(86) International application number: PCT/KR2024/007637
(87) International publication number: WO 2025/033661

(57) **Abstract**

The present disclosure relates to an artificial intelligence (AI) system and application thereof, which use a machine learning algorithm. An electronic device according to the present disclosure may include memory storing one or more instructions, and one or more processors configured to execute the one or more instructions stored in the memory, wherein the one or more processors are configured to transmit, to a server, request information that is obtained from at least one of situation information and metadata corresponding to content, the request information including input conversational text information, and receive, from the server, a recommendation result based on the request information.

## Description

### Technical Field

Disclosed various embodiments relate to an electronic device and an operation method thereof, and more particularly, to an electronic device having embedded therein an artificial intelligence technology, and an operation method using the electronic device.

### Background Art

Hyper-scale artificial intelligence (Al) is an Al model trained on a large amount of data. The hyper-scale Al is capable of processing and analyzing a large amount of data, and exhibits high accuracy and performance.

With the introduction of the hyper-scale Al, the performance of generative Al has significantly advanced. Unlike the existing Al system designed to recognize and predict a pattern, the generative Al is an Al algorithm that generates new data based on existing data.

### Disclosure of Invention

### Solution to Problem

According to an embodiment, an electronic device may include memory storing one or more instructions, and one or more processors configured to execute the one or more instructions stored in the memory.

In an embodiment, the one or more processors may be configured to transmit, to a server, request information that is obtained from at least one of situation information and metadata corresponding to content, the request information including input conversational text information.

In an embodiment, the one or more processors may be configured to receive, from the server, a recommendation result based on the request information.

### Brief Description of Drawings

FIG. 1 illustrates an electronic device that transmits request information to a server and receives a recommendation result from the server, according to an embodiment.
FIG. 2 is a block diagram of an electronic device according to an embodiment.
FIG. 3 illustrates a block diagram of a processor according to an embodiment.
FIG. 4 is a block diagram of a situation information obtainer, according to an embodiment.
FIG. 5 illustrates a case in which an electronic device outputs a video signal that is a recommendation result received from a server, according to an embodiment.
FIG. 6 illustrates a case in which an electronic device outputs an audio signal as a recommendation result received from a server, according to an embodiment.
FIG. 7 illustrates a case in which an electronic device outputs a video signal as a recommendation result received from a server, according to an embodiment.
FIG. 8 illustrates a case in which an electronic device outputs a video signal that is a recommendation result received from a server, according to an embodiment.
FIG. 9 is a block diagram of an electronic device according to an embodiment.
FIG. 10 is a block diagram of a server according to an embodiment.
FIG. 11 is a block diagram of a server according to an embodiment.
FIG. 12 illustrates a case in which a server obtains both a recommendation result and a recommendation reason, according to an embodiment.
FIG. 13 illustrates a case in which a server generates a recommendation result by using a consistent method, according to an embodiment.
FIG. 14 illustrates a case in which a server generates a recommendation result by using a consistent method, according to an embodiment.
FIG. 15 is a diagram illustrating a case in which a server obtains a recommendation result by using a plurality of theme-specific neural networks, according to an embodiment.
FIG. 16 illustrates a recommendation result output by an electronic device, according to an embodiment.
FIG. 17 is a flowchart of an operation method of an electronic device and a server, according to an embodiment.
FIG. 18 is a flowchart of an operation method of an electronic device and a server, according to an embodiment.

### Mode for the Invention

According to an embodiment, a server may include memory storing one or more instructions and one or more processors configured to execute the one or more instructions stored in the memory.

In an embodiment, the one or more processors may be configured to, when request information including input conversational text information is received from an electronic device, transmit, to the electronic device, a recommendation result including a recommendation reason that corresponds to the request information and is obtained based on one or more neural networks.

According to an embodiment, an operation method of an electronic device may include transmitting, to a server, request information that is obtained from at least one of situation information and metadata corresponding to content, the request information including input conversational text information.

In an embodiment, the operation method of the electronic device may include receiving, from the server, a recommendation result based on the request information.

According to an embodiment, an operation method of a server may include, when request information including input conversational text information is received from an electronic device, transmitting, to the electronic device, a recommendation result including a recommendation reason that corresponds to the request information and is obtained based on one or more neural networks.

Throughout the present disclosure, the expression "at least one of a, b or c" indicates only a, only b, only c, both a and b, both a and c, both b and c, all of a, b, and c, or variations thereof.

Hereinafter, an embodiment of the present disclosure will now be described more fully with reference to the accompanying drawings for one of ordinary skill in the art to be able to perform the embodiment without any difficulty. The present disclosure may, however, be embodied in many different forms and should not be construed as being limited to the embodiment set forth herein.

Although the terms used in the present disclosure are selected from among common terms that are currently used, in consideration of their functions in the present disclosure, the terms may vary according the intention of one of ordinary skill in the art, a precedent, or the advent of new technology. Therefore, the terms used in the present disclosure are not merely designations of the terms, but the terms are defined based on the meaning of the terms and content throughout the present disclosure.

In addition, the terms used in the present disclosure are merely intended to describe specific embodiments, and are not intended to limit the present disclosure.

Throughout the specification, it will also be understood that when an element is referred to as being "connected to" or "coupled with" another element, it can be directly connected to or coupled with the other element, or it can be electrically connected to or coupled with the other element by having an intervening element interposed therebetween.

In the detailed description, in particular, in claims, the use of the term "the" and similar indicating terms may correspond to singular and plural forms. The steps of all methods described in the present disclosure can be performed in any appropriate order unless otherwise indicated herein or otherwise clearly contradicted by context. The present disclosure is not limited by the steps described herein.

Throughout the specification, the expression "in some embodiments" or "in an embodiment" is described, but the expression does not necessarily indicate the same embodiment.

Some embodiments of the present disclosure may be described in terms of functional block configurations and various processing steps. Some or all of functional blocks may be realized by any number of hardware and/or software configurations configured to perform the specified functions. For example, the functional blocks of the present disclosure may be implemented by one or more microprocessors, or may be implemented by circuitry configurations for predetermined functions. In addition, for example, the functional blocks of the present disclosure may be implemented with any programming or various scripting languages. The functional blocks may be implemented in algorithms that are executed on one or more processors. Furthermore, the present disclosure could employ any number of techniques according to the related art for electronics configuration, signal processing and/or data processing, and the like. The terms "mechanism", "element", "means", "configuration", or the like may be broadly used and are not limited to mechanical or physical embodiments.

Furthermore, connecting lines or connectors between elements shown in drawings are intended to represent exemplary functional connection and/or physical or circuitry connection between the elements. It should be noted that many alternative or additional functional connections, physical connections or circuitry connections may be present in a practical device.

Also, the terms such as "... unit," "module," or the like used in the present disclosure indicate a unit, which processes at least one function or operation, and the unit may be implemented by hardware or software, or by a combination of hardware and software.

Also, the term "user" used in the specification may indicate a person who uses an electronic device, and may include a consumer, an evaluator, a viewer, an administrator, or an installation technician.

Hereinafter, the present disclosure will now be described in detail with reference to the accompanying drawings.

The present disclosure may relate to an artificial intelligence (AI) system using a machine learning algorithm and/or the application of the Al system.

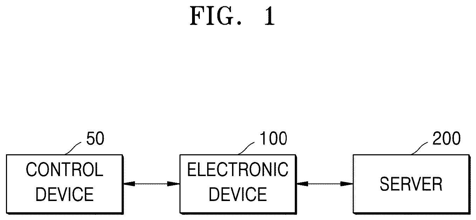

FIG. 1 illustrates an electronic device 100 that transmits request information to a server 200 and receives a recommendation result from the server 200, according to an embodiment.

Referring to FIG. 1, the electronic device 100 may be an electronic device capable of outputting an image. According to an embodiment, the electronic device 100 may be implemented as an electronic device in various forms including a display. The electronic device 100 may be stationary or mobile and may be a digital television (TV) capable of receiving digital broadcast, but the present disclosure is not limited thereto.

The electronic device 100 may output various types of content provided by content providers. Content may include a still image, a video such as a moving picture, audio, a subtitle, other auxiliary information, etc. A content provider may refer to a terrestrial broadcaster, a cable broadcaster, a satellite broadcaster, an Internet protocol television (IPTV) service provider, or an over-the-top (OTT) service provider which provides various types of content to consumers.

**In** an embodiment, the electronic device 100 may receive and output various types of content generated by the content provider, via an external device (not shown). For example, the external device may be implemented as a source device in various forms including a personal computer (PC), a set-top box, a Blu-ray disc player, a mobile phone, a game console, a home theater, an audio player, a USB, etc. The external device may be connected to the electronic device 100 via a wired communication network through a high-definition multimedia interface (HDMI), or a wireless communication network, and thus, may provide various types of content to the electronic device 100. The electronic device 100 may receive and output video on demand (VoD) content via a set-top box, the VoD content being provided by an IPTV service provider or an OTT service provider. A VoD service refers to a service that provides a user-desired video at a user-desired time via communication network connection, and may indicate various types of content provided by an OTT service provider or an IPTV service provider. The IPTV service provider or the OTT service provider may provide not only VoD content but also provide real-time broadcast programs.

In an embodiment, the electronic device 100 may be a smart TV. The smart TV may refer to a digital TV in which an operating system (OS) and an Internet access function are embedded. The smart TV may also be referred to as an Internet TV, a connected TV, or a hybrid TV.

In an embodiment, in addition to the real-time broadcast programs, the electronic device 100 may stream and output various types of VoD content generated by an OTT service provider such as YouTube ^{™}, Netflix ^{™}, etc., by using the OS embedded therein.

In an embodiment, the electronic device 100 may access Internet and may provide a web surfing service, a social network service, etc. Also, the electronic device 100 may perform a communication center function capable of checking news, weather, emails, etc., in real time.

In an embodiment, the electronic device 100 may execute various types of applications. The electronic device 100 may have installed therein various types of applications as a default. Alternatively, the electronic device 100 may access Internet, may search for a user-requested application, and may install the application, under the control of a user. The electronic device 100 may execute the application and may provide various services.

In an embodiment, the electronic device 100 may be connected to the external device such as the set-top box via a wireless network following a communication standard such as Bluetooth, a wireless local area network (WLAN) (e.g., Wi-Fi), wireless broadband (WiBro), Worldwide Interoperability for Microwave Access (WiMAX), code-division multiple access (CDMA), wideband CDMA (WCDMA), or the like, and may receive an image signal from the external device.

In an embodiment, the electronic device 100 may be connected to the external device via a wired cable, and may receive an image signal from the external device or may transmit an image signal to the external device. A wired cable 140 may include a port such as a universal serial bus (USB) port, a HDMI port, a DisplayPort (DP) port, or a Thunderbolt^{™} port, which are capable of simultaneously transmitting a video signal and an audio signal. Alternatively, the wired cable may include a port for separately transmitting a video signal and an audio signal.

In an embodiment, the electronic device 100 may be implemented as an electronic device not including an image display device such as a display. For example, when the electronic device 100 is an external device itself such as an Internet receiving device that receives content from a set-top box, a satellite broadcast receiver, and an OTT service provider, the electronic device 100 may be in the form without the image display device.

In this case, the electronic device 100 may be connected to the image display device by wire, and may transmit, to the image display device, a signal input by an external source. For example, the electronic device 100 may be connected to the image display device by using a port such as a USB port, a HDMI port, a DP port, or a Thunderbolt^{™} port, which are capable of simultaneously transmitting a video signal and an audio signal. Alternatively, the electronic device 100 may be connected to the image display device by using a port for separately transmitting a video signal and an audio signal.

In an embodiment, the electronic device 100 may be controlled by a control device 50. In an embodiment, the control device 50 may be a device such as a remote controller used to control the electronic device 100. A user may control various functions of the electronic device 100 by using the control device 50.

In an embodiment, the control device 50 may be a device dedicated to the electronic device 100. Alternatively, in an embodiment, the control device 50 may be an electronic device such as a smartphone or an Al speaker which performs other operation as a main function, other than an operation of controlling the electronic device 100. In this case, the user may install a remote-controller application in the control device 50, and thus, may control the electronic device 100 by using the control device 50. In this case, the control device 50 may include a Wi-Fi, Bluetooth, or infrared communication module. The control device 50 may transmit and receive data to and from the electronic device 100 by using the Wi-Fi, Bluetooth, or infrared communication module.

In an embodiment, the control device 50 may include an input part. The input part may receive a user input for controlling the electronic device 100. The input part included in the control device 50 may include a plurality of keys. The key may have various forms such as a physical button for receiving a user's push input, a jog and shuttle, a touch button provided on a touchpad for sensing a touch, etc. The user may control various functions of the electronic device 100 by using a plurality of keys arranged at the control device 50.

The plurality of keys included in the control device 50 may be used to control the various functions of the electronic device 100.

However, the present disclosure is not limited thereto, and in an embodiment, at least one of the electronic device 100 or the control device 50 may include a microphone capable of receiving a user's speech input. When the control device 50 includes the microphone, the microphone may receive a user's analog speech signal, may convert it into a digital format, and may transmit it to the electronic device 100. In an embodiment, the control device 50 may receive a user's speech signal via the microphone, may convert it into a digital format, and may transmit the digitized speech signal to the electronic device 100 by using a data transmission communication scheme such as Bluetooth, Wi-Fi, etc. In an embodiment, when the electronic device 100 includes the microphone, the microphone may capture a user's speech signal, may convert it into a digital format, and may transmit it to a processor.

In an embodiment, when the server 200 is capable of performing a speech recognition operation, the electronic device 100 may transmit a speech signal to the server 200. The server 200 may perform a speech-to-text (STT) operation of converting a speech signal received from the electronic device 100 into text.

Alternatively, when both the electronic device 100 and the server 200 are not capable of performing an STT operation, the electronic device 100 may transmit a speech signal to an STT server configured to perform an operation of converting a speech signal into text, may receive text from the STT server, and may transmit it to the server 200. Alternatively, the STT server may directly transmit the text to the server 200.

In an embodiment, the electronic device 100 may execute a speech recognition function by performing a function of a speech recognition engine without interoperation with a separate server. For example, in an embodiment, when the electronic device 100 is capable of providing a speech recognition service as an on-device type, the electronic device 100 may perform an operation of interpreting a speech language and converting its content into text data. In an embodiment, when the electronic device 100 is capable of performing an STT operation on a speech signal, the electronic device 100 may convert a speech signal into text and may transmit converted text to the server 200.

In an embodiment, the electronic device 100 may include a camera, a motion sensor, etc. which is capable of recognizing a user gesture as an input.

Previously, a remote controller has a form in which various types of keys used to control the electronic device 100 are all exposed on a front surface. However, recently, a simplified remote controller in which rarely-used buttons are decreased and only function-focused buttons that are frequently used by a user are included is developed and used. For example, a remote controller may include a small number of keys such as a channel up or down key, a volume up or down key, 4-direction keys, a key for return to main screen, a search key, etc. Therefore, a user controls the electronic device 100 by using the remote controller, i.e., the small number of keys included in the control device 50.

A system using a generative Al technology is mainly implemented for usage in websites or applications. Therefore, it is difficult for the user to experience the generative Al technology by using the electronic device 100 such as a TV to be controlled by the control device 50. That is, in order to use a generative Al system, the electronic device 100 has to transmit conversational questions to a generative AI, however, when the remote controller includes only the small number of keys, it is difficult for the user to input a conversational question to the electronic device 100 by using the remote controller.

The present disclosure is provided to solve this problem, and even when a user does not directly input a conversation by using the control device 50, the electronic device 100 according to an embodiment may automatically generate user-desired request information based on situation information or metadata corresponding to content, may transmit it to a generative Al model, and may request a recommendation result.

In an embodiment, the electronic device 100 may obtain situation information. In an embodiment, the situation information may be information indicating a situation of the electronic device 100, a situation of a user who is using the electronic device 100, or a circumstantial situation around the electronic device 100. For example, the situation information may include at least one of context information of content that is currently output by the electronic device 100, user information, characteristic information, and circumstantial situation information.

In an embodiment, the electronic device 100 may obtain metadata corresponding to content. The metadata corresponding to content may be structured data of content, and may be data of an attribute of the content or may be data for describing the content.

In an embodiment, the metadata corresponding to content may include at least one of metadata corresponding to content being currently output by the electronic device 100, metadata corresponding to content outputtable by the electronic device 100, and schedule information.

In an embodiment, the electronic device 100 may generate request information from at least one of the situation information and the metadata corresponding to content.

In an embodiment, the request information may be information that the electronic device 100 requests the server 200, and may include information requesting recommendation of content, a channel, etc. In an embodiment, the request information may include input conversational text information.

In an embodiment, the electronic device 100 may generate the request information, based on a particular control signal being received from the control device 50. For example, under the control of a user, when a control signal corresponding to execution of one function among a search function, a channel change function, and a function of return to main screen is received from the control device 50, the electronic device 100 may generate the request information.

For example, when there is content that the user wants to watch, the user may request, by using the control device 50, the electronic device 100 for execution of the search function, or may request a channel change so as to watch a desired channel. Alternatively, when content that the user wants to watch is content that may be received and output from another external device other than the external device currently connected to the electronic device 100 or may be usable via other website or application, the user may select a button for return to main screen provided at the control device 50 so as to control the electronic device 100 to return to a main screen or a home screen and to select other website, other application, or other external device in the home screen.

In an embodiment, when the user requests, by using the control device 50, execution of one function among a search function, a channel change function, and a function of return to main screen, the electronic device 100 may generate the request information for requesting a content search based on information about content that the user has previously watched, a channel that the user frequently watches, content that is recently popular to people, or the like.

In an embodiment, the electronic device 100 may obtain context information of content that the electronic device 100 currently outputs to a screen, at a constant rate or regular time intervals. When the electronic device 100 does not receive the particular control signal from the control device 50, the electronic device 100 may repeat a process of discarding pre-obtained context information of content.

In an embodiment, when the electronic device 100 receives the particular control signal from the control device 50, the electronic device 100 may generate the request information based on content information obtained during a preset time period before the particular control signal is received. For example, when the electronic device 100 receives a control signal for requesting execution of a channel change function at a time point of t from the control device 50, the electronic device 100 may generate request information based on context information obtained for 30 seconds up to the time point of t.

In an embodiment, the electronic device 100 may transmit the request information to the server 200, based on the particular control signal being received from the control device 50.

In an embodiment, the electronic device 100 may be connected to the server 200 via a wired or wireless communication network.

In an embodiment, the server 200 may be a server that provides a recommendation result by using a hyper-scale generative Al model.

In an embodiment, the server 200 may be a server that uses one or more neural networks. In an embodiment, the neural network that the server 200 uses may be a hyper-scale conversational generative Al model.

In an embodiment, the server 200 may receive request information including conversations from the electronic device 100, and may input this to the neural network, i.e., an Al model, thereby obtaining a result. In an embodiment, the recommendation result that the server 200 obtains by using the Al model may be information including output conversations.

In an embodiment, the server 200 may transmit, to the electronic device 100, the recommendation result obtained from the Al model. In an embodiment, the server 200 may obtain a recommendation reason along with the recommendation result by using the Al model. In an embodiment, the server 200 may transmit the recommendation result and the recommendation reason to the electronic device 100, thereby allowing the user to use both the recommendation result and the recommendation reason.

In an embodiment, the server 200 may obtain additional information. In an embodiment, the additional information may be information that the server 200 collects to provide the electronic device 100 with a more appropriate recommendation result.

In an embodiment, the additional information may include at least one of metadata corresponding to content, popular content, curated content, content selected based on particular theme, and key performance index (KPI) index.

In an embodiment, the server 200 may obtain user information. The user information may be information generated according to a particular user or an account of the particular electronic device 100, and may include setting information of the particular user or a user of the particular electronic device 100, viewing history information of a user, i.e., channel or content usage history information of the user, channel change history information, user profile information, or the like.

In an embodiment, the user information may be stored in a user information database (DB). Also, the user information may be updated by information fed back from the user.

In an embodiment, the server 200 may input recommendation request information along with at least one of the additional information and the user information to the one or more neural networks, and thus, may obtain the recommendation result from the one or more neural networks.

In an embodiment, the server 200 may input, to the one or more neural networks, candidate information that may be a recommendation reason. The candidate information that may be the recommendation reason may include user's preference, a user's viewing history, user setting information, information of content or programs that are popular to people, or the like.

In an embodiment, the one or more neural networks that the server 200 uses may include a plurality of theme-specific neural networks. The neural networks for each of the plurality of themes may refer to an Al model trained on training data of different themes.

In an embodiment, the server 200 may input the request information received from the electronic device 100 to the neural networks for the respective themes. In an embodiment, the server 200 may obtain a recommendation result from at least one of the neural networks for the respective themes.

In an embodiment, the server 200 may generate, as the recommendation result, at least one of an executable operation, an outputtable channel, information corresponding to content, and a recommendation reason. The server 200 may transmit the recommendation result to the electronic device 100.

In an embodiment, the electronic device 100 may receive the recommendation result from the server 200, and may output at least one of an audio signal and a video signal which correspond to the recommendation result. In an embodiment, the video signal that corresponds to the recommendation result may include text information including conversations. In an embodiment, the electronic device 100 may output the recommendation result as a multi-view screen. The multi-view screen may be a screen including an image or metadata for a channel or content according to the recommendation result received from the server 200.

However, the present disclosure is not limited thereto, and in an embodiment, the electronic device 100 may have embedded therein the aforementioned Al model. That is, the electronic device 100 may include the generative Al model. The electronic device 100 may directly obtain the recommendation result from the request information by using an on-device Al technology. That is, the electronic device 100 may autonomously collect and process information without passing through a cloud server, and thus, may rapidly obtain the recommendation result. The electronic device 100 may input request information along with at least one of additional information and user information to the one or more neural networks, and thus, may directly obtain a recommendation result from the one or more neural networks.

As described above, according to an embodiment, when a user controls the electronic device 100 by using a control device such as a remote controller with a limited input, the electronic device 100 may automatically generate request information including input conversations. The electronic device 100 may output the recommendation result obtained based on the request information, and thus, may allow the user to have an experience in which the user feels like having a conversation with the generative Al model.

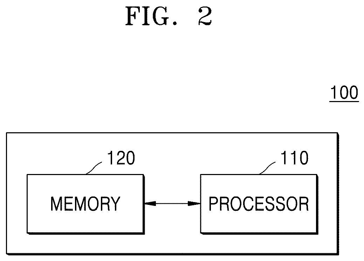

FIG. 2 is a block diagram of the electronic device 100 according to an embodiment.

The electronic device 100 of FIG. 2 may be an example of the electronic device 100 of FIG. 1.

In an embodiment, the electronic device 100 may be an electronic device capable of outputting a video. The electronic device 100 according to an embodiment may be implemented as an electronic device in various forms including a display. The electronic device 100 may be stationary or mobile and may be a digital TV capable of receiving digital broadcast, but the present disclosure is not limited thereto.

In an embodiment, the electronic device 100 may include at least one of a desktop, a smartphone, a tablet PC, a mobile phone, a video phone, an electronic book reader (e-book reader), a laptop PC, a netbook computer, a digital camera, a personal digital assistant (PDA), a portable multimedia player (PMP), a camcorder, a navigation device, a wearable device, a smart watch, a home network system, a security system, and a medical apparatus.

The electronic device 100 may be implemented as not only a flat display device but also implemented as a curved display device having curvature or a flexible display device for which curvature is adjustable. An output resolution of the electronic device 100 may have various resolutions such as high definition (HD), full HD, ultra HD, or definition clearer than the ultra HD.

In an embodiment, the electronic device 100 may be implemented as an electronic device not including a display. In this case, the electronic device 100 may directly receive various types of content provided by a content provider, and may provide the content to an external display or an external speaker connected to the electronic device 100, thereby outputting the content via the external display or the external speaker.

Referring to FIG. 2, the electronic device 100 may include a processor 110 and memory 120.

The memory 120 according to an embodiment may store at least one instruction. The memory 120 may store at least one program to be executed by the processor 110. Also, the memory 120 may store data input to the electronic device 100 or output from the electronic device 100.

The memory 120 may include at least one type of storage medium from among flash memory, a hard disk, a multimedia card micro, a memory card (e.g., a secure digital (SD) or extreme digital (XD) memory card), random access memory (RAM), static random access memory (SRAM), read-only memory (ROM), electrically erasable programmable read-only memory (EEPROM), programmable read-only memory (PROM), magnetic memory, a magnetic disk, and an optical disc.

In an embodiment, the memory 120 may store one or more instructions for obtaining at least one of situation information and metadata corresponding to content.

In an embodiment, the memory 120 may store one or more instructions for generating request information from at least one of the situation information and the metadata corresponding to content. In an embodiment, the request information may include input conversational text information.

In an embodiment, the memory 120 may store one or more instructions for transmitting the request information to the server 200 and receiving a recommendation result based on the request information from the server 200.

In an embodiment, the memory 120 may store one or more instructions for transmitting the request information to the server 200, based on a control signal being received from the control device 50.

In an embodiment, the memory 120 may store one or more instructions for transmitting the request information to the server 200, when a control signal corresponding to execution of one of a search function, a channel change function, and a function of return to main screen is received.

In an embodiment, the memory 120 may store one or more instructions for outputting at least one of an audio signal and a video signal which correspond to the recommendation result received from the server 200.

In an embodiment, the memory 120 may store one or more instructions for outputting the video signal corresponding to the recommendation result received from the server 200, as text information including conversations.

In an embodiment, the memory 120 may store one or more instructions for outputting the recommendation result as a multi-view screen.

In an embodiment, the memory 120 may store one or more instructions for generating a multi-view screen. For example, the memory 120 may store multi-view screens that are differently configured according to the number of sub-screens.

In an embodiment, the memory 120 may store one or more instructions for generating, in a configuration of the pre-stored multi-view screen, a screen including an image or metadata of a channel or content according to the recommendation result received from the server 200.

In an embodiment, the memory 120 may store one or more instructions for previously requesting the server 200 for screen information to be output when a first area among a plurality of sub-screens included in the multi-view screen is selected, before a user input of selecting the first area is received.

In an embodiment, the memory 120 may store one or more instructions for, when the user input of selecting the first area is received, outputting a screen that is based on the recommendation result and corresponds to the screen information previously requested and then received.

In an embodiment, the memory 120 may store one or more Al models (neural network models).

In an embodiment, when the memory 120 stores a neural network model, the neural network model may directly generate a multi-view screen including an image or metadata of a channel or content according to a recommendation result.

In an embodiment, when the memory 120 stores a neural network model, the neural network model may perform an operation of pre-generating and temporarily storing screen information to be output when a first area among a plurality of sub-screens included in a multi-view screen is selected, before a control signal for selecting the first area, i.e., a user input of selecting the first area, is received.

In an embodiment, the memory 120 may store user information. In an embodiment, the user information may be information stored to continue user-customized conversations, and may include at least one of short-term memory for storing short-term user information and long-term memory for storing long-term user information.

In an embodiment, the short-term memory may store short-term history information with which the user uses the electronic device 100 after the user turns on power of the electronic device 100. For example, the short-term memory may store information of a program or channel the user watched, metadata of the information of the program or channel the user watched, information of a source device or OTT service provider which provided the program or the channel, or the like. The short-term history information stored in the short-term memory may be stored from a time point when the power of the electronic device 100 is on, and may be deleted when the power of the electronic device 100 is off.

In an embodiment, the long-term memory may store long-term history information with which the user uses the electronic device 100 after the user resets the electronic device 100. The history information stored in the long-term memory may be kept stored, regardless of turning on or off the electronic device 100, and may be deleted when the electronic device 100 is reset.

The processor 110 according to an embodiment controls all operations of the electronic device 100. The processor 110 may execute one or more instructions stored in the memory 120 to control the electronic device 100 to operate. In an embodiment, the processor 110 may include one or more processors.

In an embodiment, the one or more processors 110 may execute the one or more instructions to obtain situation information. In an embodiment, the situation information may include at least one of context information of content that is currently output by the electronic device 100, characteristic information, user information, and circumstantial situation information.

In an embodiment, the one or more processors 110 may execute the one or more instructions to obtain metadata corresponding to content. In an embodiment, the metadata corresponding to content may include at least one of metadata corresponding to content being currently output by the electronic device 100, metadata corresponding to content outputtable by the electronic device 100, and schedule information. In an embodiment, the one or more processors 110 may obtain a schedule table such as an electronic program guide (EPG) or the metadata corresponding to content from a broadcasting station server, an OTT service provider server, or the like.

In an embodiment, the one or more processors 110 may execute the one or more instructions to generate request information including input conversational text information, from at least one of the situation information and the metadata corresponding to content.

In an embodiment, the one or more processors 110 may execute the one or more instructions to transmit the request information to the server 200 and receive, from the server 200, a recommendation result obtained based on the request information.

In an embodiment, the recommendation result received from the server 200 may include at least one of an operation executable by the electronic device 100 and information about a channel or content outputtable by the electronic device 100.

In an embodiment, the one or more processors 110 may execute the one or more instructions to output at least one of an audio signal and a video signal which correspond to the recommendation result received from the server 200. In an embodiment, the video signal that corresponds to the recommendation result may include text information including conversations. In an embodiment, the video signal that corresponds to the recommendation result may be output via a multi-view screen. In an embodiment, the one or more processors 110 may output a channel or content according to the recommendation result received from the server 200, via a sub-screen included in the multi-view screen.

In an embodiment, when the one or more processors 110 receives the recommendation result from the server 200 and outputs the multi-view screen, the electronic device 100 may previously request the server 200 for screen information of a next screen to be output when any one sub-screen among a plurality of sub-screens included in the multi-view screen is selected, before a control signal for selecting the sub-screen is received. For example, when the multi-view screen output from the electronic device 100 includes three areas, a user may select any one area among the three areas included in the multi-view screen output from the electronic device 100.

In an embodiment, the one or more processors 110 may execute the one or more instructions to previously request the server 200 for screen information of a next screen to be output when a first area among a plurality of areas that are the plurality of sub-screens included in the multi-view screen is selected, before a control signal for selecting the first area is received.

The screen information of the next screen to be output when the first area is selected may be information including information to be output via the next screen other than the first area when the first area is selected and is moved to a center screen of the multi-view screen.

When the electronic device 100 requests the server 200 for the screen information of the next screen after a user selects the first area, the server 200 has to search for metadata for content or a program to be included in the next screen, and has to transmit a search result in the form of a thumbnail or metadata to the electronic device 100. However, as a certain time is requested for a process of transmitting and receiving information between the electronic device 100 and the server 200 and a process of searching for, by the server 200, content or a program to be included in a new screen to be output via a plurality of areas after the next screen that is the first screen is moved to the center screen, the user has to wait for the certain time or more until the next screen is output after the user selects the first area.

In an embodiment, in order to prevent occurrence of the certain time, the one or more processors 110 may previously request the server 200 for next screen information to be output when any area among the plurality of areas included in the multi-view screen is selected, before a control signal for selecting the area is received. In an embodiment, the one or more processors 110 may previously receive, from the server 200, metadata of content or a program to be included in a next screen, and may temporarily store it. In an embodiment, when a user selects one screen among a plurality of sub-screens, the one or more processors 110 may immediately output a next screen based on a recommendation result corresponding to screen information, based on the screen information that is stored after it is previously received from the server 200, so that user convenience may be improved.

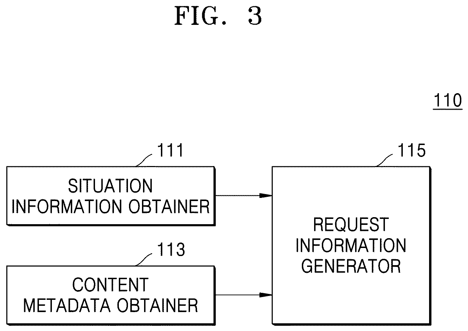

FIG. 3 illustrates a block diagram of the processor 110 according to an embodiment.

Referring to FIG. 3, the processor 110 of FIG. 3 may be an example of the processor 110 included in the electronic device 100 shown in FIG. 2.

In an embodiment, the processor 110 may include a situation information obtainer 111, a content metadata obtainer 113, and a request information generator 115.

In an embodiment, each element included in the processor 110 may be a module. In an embodiment, the module may refer to a functional and structural combination of hardware for performing the technical concept of the present disclosure and software for operating the hardware. For example, the module may indicate preset code and a logic unit of a hardware resource for performing the preset code, but does not necessarily indicate physically connected code or one type of hardware.

In an embodiment, the situation information obtainer 111 may obtain situation information for generating request information.

In an embodiment, the situation information may include at least one of information indicating a situation of the electronic device 100, information indicating a situation of a user who is using the electronic device 100, or information indicating a situation around the electronic device 100.

In an embodiment, the situation information may include situation information of the electronic device 100. The situation information of the electronic device 100 may include at least one of context information about content that is currently output by the electronic device 100 and characteristic information.

In an embodiment, the situation information obtainer 111 may obtain the context information from the content that is currently output by the electronic device 100. In an embodiment, the context information may include various types of information which are obtainable with respect to the content that is output via a current screen by the electronic device 100. For example, the context information may include at least one of a title of content or a program, a channel name, a channel number, a subtitle, a logo included in a screen, and text information, which is obtained from the output screen.

In an embodiment, the situation information obtainer 111 may obtain the characteristic information as the situation information of the electronic device 100. In an embodiment, the characteristic information may include information related to unique characteristics of the electronic device 100, including resolution information supported by the electronic device 100, information as to whether the electronic device 100 is rotatable to a horizontal screen and a vertical screen, information as to whether the electronic device 100 is capable of executing an ambient service, etc.

In an embodiment, the situation information obtainer 111 may obtain situation information about a user. In an embodiment, the situation information obtainer 111 may obtain the situation information about the user by reading the situation information about the user from the short-term memory or the long-term memory included in the memory 120.

In an embodiment, the situation information about the user may include user information. The user information may include various pieces of information about the user which the electronic device 100 identifies, such as user profile information, viewing history information of the user, setting information of the user, OTT subscription information of the user, etc. In an embodiment, the viewing history information of the user may include information about a channel or content that the user frequently watches, information about a channel or content which is set via a bookmark function, etc.

In an embodiment, the situation information obtainer 111 may obtain circumstantial situation information of the electronic device 100. In an embodiment, the circumstantial situation information of the electronic device 100 may be information that is irrelevant to the electronic device 100 itself and indicates a circumstantial situation requested to generate request information. For example, the circumstantial situation information of the electronic device 100 may include information of a current time or a location of the electronic device 100.

In an embodiment, the situation information obtainer 111 may obtain at least one of the situation information of the electronic device 100, the situation information about the user, and the circumstantial situation information of the electronic device 100, and may transmit it to the request information generator 115.

In an embodiment, the content metadata obtainer 113 may obtain metadata corresponding to content. In an embodiment, the metadata corresponding to content may be data of an attribute of content or data for describing the content, and may be information indicating auxiliary information about the content. The metadata corresponding to content may be used to identify, analyze, and/or classify the content.

In an embodiment, the content metadata obtainer 113 may obtain at least one of metadata corresponding to content being currently output by the electronic device 100, metadata corresponding to content not being currently output by the electronic device 100 but being outputtable by the electronic device 100, and schedule information.

In an embodiment, the content metadata obtainer 113 may obtain the metadata corresponding to content from a content provider, a broadcasting station server, an OTT service provider server, or the like. In an embodiment, the content metadata obtainer 113 may obtain, as metadata, a title, a subtitle, etc., of broadcast included in a broadcast stream from a digital broadcast stream.

In an embodiment, the content metadata obtainer 113 may obtain EPG information including information of all channels that are currently viewable and information of channels that are soon to be viewable, information indicating an attribute or category of content which includes a title, cast, a series, a production date, a production company, a cameo appearance, a tag, etc. of the content. An EPG may indicate a broadcast program guide service including a broadcast time, content, cast information, etc. of a broadcast program.

In an embodiment, the content metadata obtainer 113 may obtain various pieces of metadata of the content and may transmit them to the request information generator 115.

In an embodiment, the request information generator 115 may refer to a module configured to generate an input conversation to have a conversation with an Al server. In an embodiment, the request information generator 115 may generate request information from at least one of the situation information received from the situation information obtainer 111 and the metadata received from the content metadata obtainer 113.

In an embodiment, the request information generator 115 may perform a natural language generation operation, based on the pieces of received information.

Natural language processing refers to a process of enabling a computer to process and understand human language, and in the process, a natural language is processed via a morphological analysis and semantic analysis to allow the computer to comprehend the natural language and then to generate a result thereof as text, a speech, or an image which is understandable to humans. A natural language processing technology may be divided into natural language understanding and natural language generation. The natural language understanding refers to a technology for enabling a machine to understand sentences in the form of natural language, such as machine reading comprehension, sentiment analysis, and semantic similarity measurement, and on the other hand, the natural language generation refers to a technology for generating an output in natural language form based on a result processed by the machine.

In an embodiment, the request information generator 115 may generate, by using the natural language generation technology, the request information including input conversational text information.

In an embodiment, the request information generator 115 may generate a conversation-form natural language by applying predefined rules or statistics to a plurality of pieces of collected information. When the request information generator 115 generates the request information by using the predefined rules, a program, etc., the input conversational text information may be quickly generated with a small amount of computation.

Alternatively, in an embodiment, the request information generator 115 may generate the request information, based on a model using a neural network. In an embodiment, the request information generator 115 may generate an input conversation by using a deep learning-based Al technology by which a computer comprehends human languages and speaks with the same language as humans. When the request information generator 115 performs an operation of generating a natural language by using a neural network, a more appropriate result may be obtained whereas a higher amount of computation is requested, compared to an operation of generating a natural language based on rules.

For example, the request information generator 115 may generate the request information including input conversations, by generating natural language by using an Al model included in the electronic device 100, i.e., a neural network to perform natural language generation, by using an on-device Al technology. In this case, as the electronic device 100 autonomously collects, calculates, and processes information without passing through a cloud server, the electronic device 100 may quickly obtain the input conversational text information. However, the present disclosure is not limited thereto, and the request information generator 115 may transmit at least one of the situation information and the metadata corresponding to content to a separate external Al model, and may receive the request information including the input conversational text information from the external Al model.

In an embodiment, the request information generator 115 may transmit the input conversational text information to the server 200.

In an embodiment, the request information generator 115 may generate, as request information, auxiliary information other than the input conversational text information. The request information generator 115 may generate the input conversational text information based on information, i.e., the situation information and the metadata corresponding to content, collected from the situation information obtainer 111 and the content metadata obtainer 113, and may generate request information in the form of auxiliary information that corresponds to an entirety or part of the collected information which is not used in generation of the input conversational text information.

For example, the request information generator 115 may not generate the characteristic information of the electronic device 100, an IP address of the electronic device 100, information of a current time, etc., as a conversation but may generate it as separate auxiliary information.

In an embodiment, the request information generator 115 may generate the auxiliary information in the form of metadata. In an embodiment, the request information generator 115 may transmit the request information including both the input conversational text information and the auxiliary information to the server 200.

As described above, according to an embodiment, the electronic device 100 may automatically generate the request information, based on various situations and metadata corresponding to content, and may transmit it to the server 200.

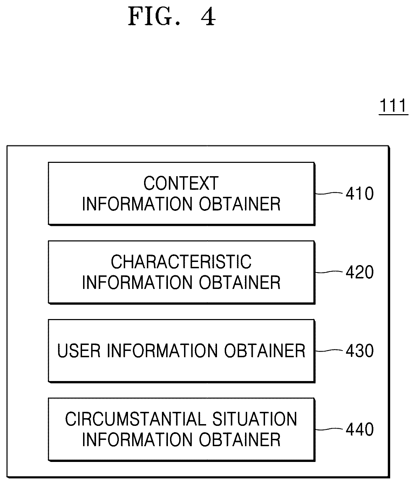

FIG. 4 is a block diagram of the situation information obtainer 111, according to an embodiment.

Referring to FIG. 4, the situation information obtainer 111 of FIG. 4 may be an example of the situation information obtainer 111 of FIG. 3.

In an embodiment, the situation information obtainer 111 may include a context information obtainer 410, a characteristic information obtainer 420, a user information obtainer 430, and a circumstantial situation information obtainer 440.

In an embodiment, the context information obtainer 410 may recognize context from a currently-output screen. For example, the context information may be a title of a channel or program, and may include a type of an object included in a captured screen or an operation of the object. The context information obtainer 410 may extract, from the currently-output screen, various pieces of information that are usable in generation of a conversation and include a channel name, a channel number, a title of content, a character appearing in the content, an action of the character, script information, etc.

In an embodiment, the context information obtainer 410 may use various technologies to identify currently-output content. For example, the context information obtainer 410 may capture a screen at regular time intervals, and may perform object detection on the captured screen. In an embodiment, the context information obtainer 410 may perform the object detection by recognizing an object from the captured screen, classifying what the object is, and identifying localization of the object.

In an embodiment, the context information obtainer 410 may obtain context information by capturing a screen at regular time intervals and performing object detection on the captured screen. In an embodiment, the context information obtainer 410 may delete the context information after an elapse of a preset time. In an embodiment, the context information obtainer 410 may continuously obtain the context information even before a preset control signal is received from the control device 50. In an embodiment, when the preset control signal is received from the control device 50, the context information obtainer 410 may obtain, as valid context information, context information collected during a preset time period before the preset control signal is received, e.g., for 30 seconds before a time at which the control signal is received, and may transmit it to the request information generator 115.

Alternatively, in an embodiment, the context information obtainer 410 may recognize, by using an automatic content recognition (ACR) function, content being output by the electronic device 100, and may collect related information. In an embodiment, the context information obtainer 410 may obtain a characteristic from an image, audio, or a video by using a watermark technology or a finger printing technology, may compare the characteristic with a sample, and thus, may identify the content.

In an embodiment, the context information obtainer 410 may obtain the context information about the currently-output content by obtaining metadata corresponding to the currently-output content from a digital stream provided by various OTT service providers, a broadcasting station server, etc.

In an embodiment, the characteristic information obtainer 420 may obtain characteristic information.

In an embodiment, the characteristic information may include information indicating resolution information supported by the electronic device 100, e.g., the information as to whether it is HD, full HD, ultra HD, or 8K.

In an embodiment, the characteristic information may include information indicating whether the electronic device 100 is a curved display device whose screen has curvature, a flexible display device for which curvature is adjustable, or a flat-type display device.

In an embodiment, the characteristic information may include information indicating whether the electronic device 100 provides an ambient service. The ambient service may refer to a service by which, when the electronic device 100 including a display is in an off state, a meaningful image such as a painting, a picture, a watch, etc. is output, instead of a black screen.

The server 200 may recommend content appropriate for the electronic device 100, by using the unique characteristic information of the electronic device 100. For example, the server 200 may recommend content optimized for a resolution of the electronic device, or, when the electronic device 100 is a curved display device, the server 200 may recommend content optimized for a curved screen. Alternatively, when the electronic device 100 provides the ambient service, the server 200 may recommend, as a recommendation result, an image that is outputtable when the electronic device is in an off state.

In an embodiment, the user information obtainer 430 may obtain user information. In an embodiment, the user information obtainer 430 may obtain the user information by reading the user information from the short-term memory or the long-term memory included in the memory 120.

In an embodiment, the user information may include user profile information. The user profile information may include a user's account, age, gender, whether a user has a spouse or children, the age of the children, or the like. The user profile information may be obtained only when the user has agreed to the use of the information. The user profile information may be used to infer preference of the user, or may be used to recommend to the user content that is popular to people having the similar profile to the user.

In an embodiment, the user information may include viewing history information of the user. The viewing history information of the user may include a type or genre of a program or content that the user frequently watches, information about an actor or a director of content that the user frequently watches, etc.

In an embodiment, the viewing history information of the user may be used to identify a liking or preference of the user.

In an embodiment, the user information may include setting information that the user has directly set. The user setting information may include, for example, a user-preferred program or preferred content that the user has directly input. Also, the user setting information may include information about a channel or content which is set by the user via a bookmark function, etc. In some cases, the user may set, via the user setting information, that particular content or program is to be included in a recommendation result or content of a particular genre is not to be included in the recommendation result.

In an embodiment, the user information may further include user account information of a website or an application, OTT subscription information of the user, etc.

In an embodiment, the circumstantial situation information obtainer 440 may obtain circumstantial situation information. In an embodiment, the circumstantial situation information may be information indicating a circumstantial situation that is irrelevant to the electronic device 100 but is usable when request information is generated. For example, the circumstantial situation information may include a current time, location information of the electronic device 100, etc. In a case where the electronic device 100 is located in Seoul of South Korea and a case where the electronic device 100 is located in Washington state of the United States of America, a time of a broadcast program that the electronic device 100 outputs may differ according to a location of the electronic device 100. Also, according to a location of the electronic device 100, a particular channel or program may be or may not be output via the electronic device 100. Therefore, the circumstantial situation information obtainer 440 may obtain the circumstantial situation information related to a circumstantial situation of the electronic device 100, and may transmit it to the request information generator 115.

In some cases, the circumstantial situation information may not be obtained by the circumstantial situation information obtainer 440 but may be automatically obtained by the server 200 when the electronic device 100 transmits request information to the server 200. For example, when the electronic device 100 calls an application programming interface (API) to transmit the request information to the server 200, the server 200 may obtain, from the call attempt, a location of the electronic device 100 by using IP information of the electronic device 100, and may obtain a current time of the electronic device 100, based on the location of the electronic device 100.

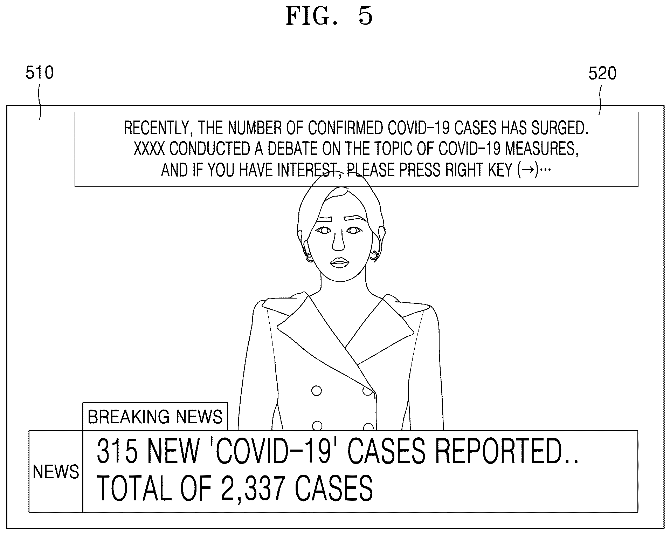

FIG. 5 illustrates a case in which the electronic device 100 outputs a video signal that is a recommendation result received from the server 200, according to an embodiment.

In an embodiment, the electronic device 100 may transmit request information to the server 200, and may receive, from the server 200, a recommendation result obtained based on the request information.

In an embodiment, the recommendation result transmitted from the server 200 to the electronic device 100 may include at least one of an executable operation, an outputtable channel, and information corresponding to content. Information corresponding to a channel or content that is outputtable by the electronic device 100 may include at least one of a thumbnail image related to the channel or the content, or metadata corresponding to the channel or the content. Also, in an embodiment, the recommendation result transmitted from the server 200 to the electronic device 100 may include a recommendation reason.

In an embodiment, the electronic device 100 may receive the recommendation result from the server 200, and may output at least one of an audio signal and a video signal which correspond to the recommendation result.

FIG. 5 illustrates a case in which the electronic device 100 outputs the video signal that corresponds to the recommendation result received from the server 200.

In an embodiment, the electronic device 100 may be set, by default, to output a video signal as a recommendation result. Alternatively, in an embodiment, a user may set a setting function of the electronic device 100 to output a video signal as a recommendation result.

In an embodiment, the user may directly set brevity of conversation to be output, a type of a language to be output, a character size or font of text information to be output, etc.

In an embodiment, a display 510 may be integrally included in the electronic device 100 or may be a configuration separate from the electronic device 100 and connected to the electronic device 100 via a wired cable, etc.

In an embodiment, the electronic device 100 may output the video signal corresponding to the recommendation result via the display 510. In an embodiment, when the electronic device 100 receives the recommendation result from the server 200 while content is output to the display 510, the electronic device 100 may output the video signal corresponding to the recommendation result along with the output content.

In an embodiment, the video signal corresponding to the recommendation result may include text information including conversations.

In an embodiment, the electronic device 100 may output the video signal in the form of text information via an interface screen 520.

In an embodiment, the electronic device 100 may display the interface screen 520 on a part of an area of the display 510. A size, an output location, transparency, and/or a shape of the interface screen 520 that outputs the video signal corresponding to the recommendation result may be variously modified.

In an embodiment, the electronic device 100 may output the entire text information all at once, or may output the entire text information over a certain time period by outputting one word or one line at a time from first text, just like a subtitle is output sequentially from the beginning.

The user may view the interface screen 520 with his/her eyes, the interface screen 520 outputting the video signal corresponding to the recommendation result.

In an embodiment, the video signal corresponding to the recommendation result may include information corresponding to a channel or content that is outputtable by the electronic device 100. For example, as shown in FIG. 5, the video signal corresponding to the recommendation result may include information recommending a particular broadcasting station or a particular program, such as "Discussion broadcast hosted by XXXX".

In an embodiment, the video signal corresponding to the recommendation result may include an operation executable by the electronic device 100. For example, as shown in FIG. 5, the video signal corresponding to the recommendation result may include a phrase instructing to perform a particular action, such as "If you have interest, please press a right key".

In an embodiment, the video signal corresponding to the recommendation result may include a recommendation reason. For example, as shown in FIG. 5, the video signal corresponding to the recommendation result may include a phrase explaining the reason of recommending the discussion broadcast by XXXX, as in "Recently, the number of confirmed COVID-19 cases has surged".

The user may view the recommendation reason and may think as if the user has conversation with the electronic device 100 or has conversation with the server 200.

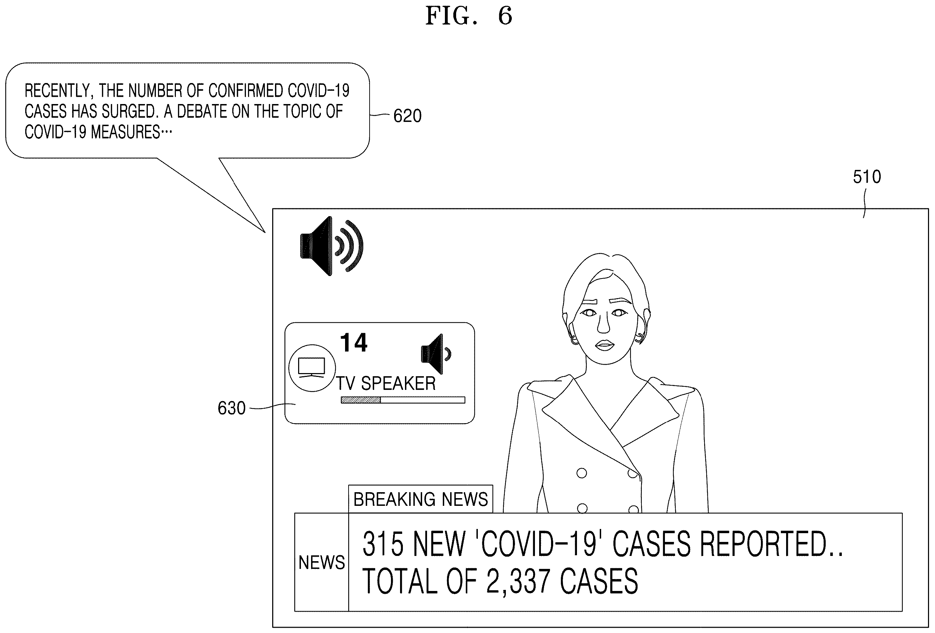

FIG. 6 illustrates a case in which the electronic device 100 outputs an audio signal as a recommendation result received from the server 200, according to an embodiment.

In an embodiment, the electronic device 100 may output the audio signal corresponding to the recommendation result via a speaker. In an embodiment, the electronic device 100 may be set, by default, to output an audio signal as a recommendation result. Alternatively, in an embodiment, a user may set a setting function of the electronic device 100 to output an audio signal as a recommendation result.

In an embodiment, the user may directly set brevity of conversation to be output, a type of a voice to be output, etc.

In an embodiment, the speaker may be integrally included in the electronic device 100, or may be a configuration separate from the electronic device 100 and connected to the electronic device 100 by wire or wirelessly.

In an embodiment, when the electronic device 100 receives the recommendation result from the server 200 while content is output to the display 510, the electronic device 100 may continuously output the content to the display 510 and may output an audio signal 620 corresponding to a recommendation result via the speaker.

In an embodiment, the electronic device 100 may output the audio signal 620 corresponding to the recommendation result via the speaker and may simultaneously adjust a volume of the electronic device 100. For example, in order to allow the audio signal 620 corresponding to the recommendation result to be further audible to the user, the electronic device 100 may lower a volume of currently-output content and may output, via an interface screen 630, a notice indicating that the volume of the currently-output content has been lowered.

In an embodiment, when the electronic device 100 does not output the recommendation result as a video signal but outputs the recommendation result as the audio signal 620 via the speaker, the content output to a screen is not obstructed by the recommendation result, and thus, the user may view the entire content via the screen.

In an embodiment, the electronic device 100 may output a recommendation result received from the server 200, by using both a video signal and an audio signal. For example, the electronic device 100 may output the audio signal 620 corresponding to the recommendation result via the speaker and may simultaneously output a video signal corresponding to the recommendation result along with the currently-output content via the display 510.

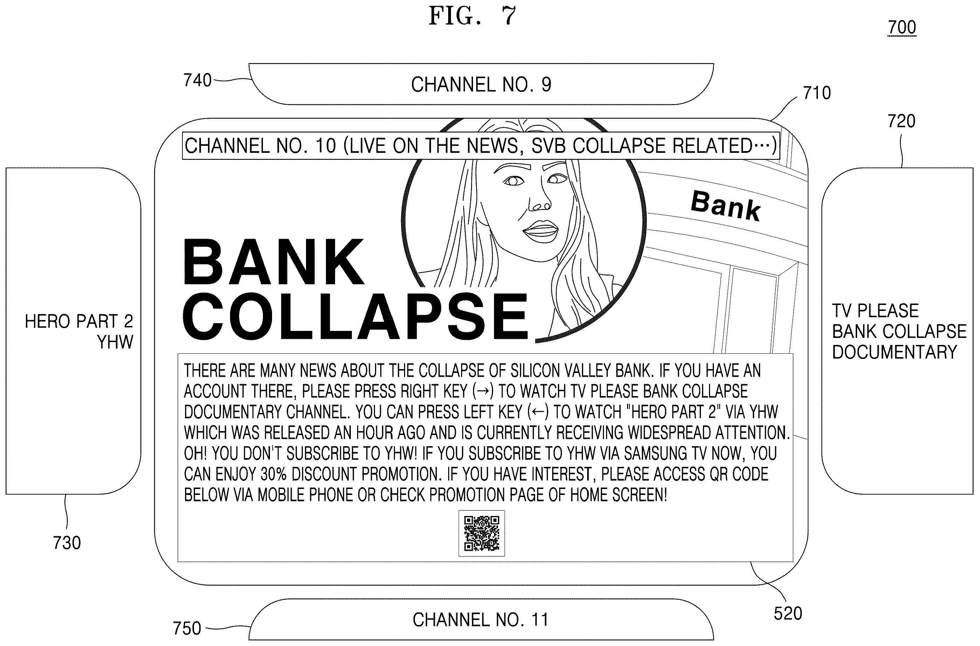

FIG. 7 illustrates a case in which the electronic device 100 outputs a video signal as a recommendation result received from the server 200, according to an embodiment.

In an embodiment, the electronic device 100 may receive a recommendation result from the server 200, and may output at least one of an audio signal and a video signal which correspond to the recommendation result.

In an embodiment, the electronic device 100 may output the video signal corresponding to the recommendation result via a multi-view screen. In an embodiment, when the recommendation result is output to the multi-view screen, the electronic device 100 may output a screen based on the recommendation result via a plurality of areas included in the multi-view screen.

In an embodiment, the electronic device 100 may output an image or metadata of a channel or recommended content which corresponds to the recommendation result received from the server 200, via the plurality of areas included in the multi-view screen.

For example, it is assumed that a user watches a channel, e.g., a channel of no. 9, and then, a control signal corresponding to channel-up is transmitted to the electronic device 100 via a user input using the control device 50.

In an embodiment, the electronic device 100 may transmit request information to the server 200, based on the control signal corresponding to channel-up being received, and may receive, from the server 200, a recommendation result based on the request information.

As shown in FIG. 7, the electronic device 100 may output the video signal based on the recommendation result via a multi-view screen 700. Referring to FIG. 7, the multi-view screen 700 may include a center screen 710, and four sub-screens 720, 730, 740, and 750.

In an embodiment, the electronic device 100 may output, via the center screen 710, a channel of no. 10 that is next to the channel of no. 9.

FIG. 7 illustrates a case in which the electronic device 100 outputs the multi-view screen 700 on which the center screen 710, and the four sub-screens 720, 730, 740, and 750 positioned in the left, right, up, and bottom of the center screen 710 are arranged and which includes a total of five sub-screens. In an embodiment, the electronic device 100 may output, via a sub-screen, a screen based on a recommendation result received from the server 200. The screen based on the recommendation result may include an image, metadata, etc. which corresponds to a recommended channel or recommended content.

In an embodiment, the electronic device 100 may provide the recommendation result via four sub-screens to match four direction keys include in the control device 50. In this case, the user may select left, right, up, and bottom buttons of the four direction keys include in the control device 50, thereby conveniently selecting each sub-screen at a location matching each button.

Alternatively, the user may select a sub-screen included in a multi-view screen by using a speech input. For example, the user may select one sub-screen among a plurality of sub-screens by saying "right, left", etc. via the microphone arranged in the control device 50 or the electronic device 100.

Alternatively, the user may take a particular gesture toward a motion sensor or a camera arranged in the control device 50 or the electronic device 100, and thus, may select one of sub-screens included in a multi-view screen. For example, the user may lift or drop a hand or move the hand to the right or the left toward the camera arranged in the electronic device 100, and thus, may allow a sub-screen corresponding to a movement direction of the hand of the user to be selected.

In an embodiment, the electronic device 100 may determine which recommendation result is to be output via which sub-screen among the four sub-screens 720, 730, 740, and 750 included in the multi-view screen 700. For example, the electronic device 100 may determine to output a channel or content, which is popular to people, via the sub-screen 730 in the left, and to output a user-customized channel or content via the sub-screen 720 in the right.

In an embodiment, as shown in FIG. 7, the electronic device 100 may output a channel or content, which is popular to people, via the sub-screen 730 that is located to the left of the center screen 710 among neighboring four areas, i.e., the neighboring four sub-screens 720, 730, 740, and 750, included in the multi-view screen 700. For example, in a case where 'Hero Part 2' provided by 'YHW' that is a particular OTT service provider is currently very popular to people, the server 200 may provide 'Hero Part 2' as the recommendation result.

In an embodiment, the electronic device 100 may output, as recommended content, content, which is popular to people, via the sub-screen 730 that is located to the left of the center screen 710. In an embodiment, the electronic device 100 may output, as metadata, a title of recommended content, i.e., 'Hero Part 2' and 'YHW' that is the OTT service provider providing the content, via the sub-screen 730 located in the left.

The user may conveniently select the sub-screen 730 located in the left, by selecting a left button among four-direction keys included in the control device 50. When the user selects the sub-screen 730 located in the left by using the control device 50, the electronic device 100 may immediately play back 'Hero Part 2' provided by 'YHW', or may position 'Hero Part 2' provided by 'YHW' in the center screen 710 of the multi-view screen and may output a next screen including other recommended channel or other recommended content via the four sub-screens 720, 730, 740, and 750 in the left, right, up, and bottom with respect to the screen of 'Hero Part 2' provided by 'YHW' positioned in the center.

In an embodiment, the electronic device 100 may output content recommended as user-customized content via the sub-screen 720 located to the right of the center screen 710.

In an embodiment, the electronic device 100 may output an image or metadata of a channel or content searched for based on user information, via the sub-screen 720 located to the right of the center screen 710.

For example, the server 200 may recognize a user history from user information included in request information, and recently, when the user has frequently watched content or a channel related to a bank collapse, the server 200 may provide, as a recommendation result, recent content or channel related to the bank collapse that is a user-interest theme.

For example, the electronic device 100 may output, via the sub-screen 720 in the right, metadata including a user-customized content's title, i.e., 'Documentary of Bank collapse' and a name, 'TV Please', of a channel that outputs the content.

In an embodiment, the electronic device 100 may output up and down channels of a currently-output channel via up and bottom screens of the center screen 710. For example, when the currently-output channel screen 710 is a channel no. 10, the electronic device 100 may output a channel no. 9 that is a previous channel and a channel no. 11 that is a next channel via the sub-screens 740 and 750 that are respectively up and bottom screens with respect to the channel no. 10 in the currently-output channel screen.

In an embodiment, the electronic device 100 may determine which recommendation result is to be output via which sub-screen among the four sub-screens 720, 730, 740, and 750 included in the multi-view screen 700, according to a random manner or a predetermined rule. For example, as shown in FIG. 7, the electronic device 100 may determine to output a channel or content, which is popular to people, via the sub-screen 730 in the left, and to output a user-customized recommendation channel or content via the sub-screen 720 on the right.

However, this is only an embodiment, and not the electronic device 100 but the server 200 may determine a configuration of the multi-view screen 700 and which recommendation result is to be output via which sub-screen among a plurality of sub-screens included in the multi-view screen, and may transmit the determination to the electronic device 100.

In an embodiment, the electronic device 100 may output text information including conversations corresponding to a recommendation result, along with the multi-view screen. For example, as shown in FIG. 7, the electronic device 100 may output, as the text information, a video signal corresponding to the recommendation result via the interface screen 520 included in one area of the center screen 710 of the multi-view screen 700.

In an embodiment, the video signal corresponding to the recommendation result may include information that describes a recommendation reason for a channel or content with respect to all or some of the plurality of sub-screens 720, 730, 740, and 750 included in the multi-view screen 700. For example, as shown in FIG. 7, the text information included in the interface screen 520 may include a reason of recommending 'Hero Part 2,' which is content provided by 'YHW'. Also, the text information included in the interface screen 520 may include a reason of recommending 'Documentary of Bank collapse' of 'TV Please' that is a particular channel.

While FIG. 7 illustrates the case in which channel names or channels numbers are output via the four sub-screens 720, 730, 740, and 750, this is only an embodiment, and the electronic device 100 may output a preview video, a thumbnail image, etc. of a recommended channel or recommended content via at least one sub-screen among the four sub-screens 720, 730, 740, and 750. For example, the electronic device 100 may output an advertisement poster, a preview video, a thumbnail image, etc. of content 'Hero Part 2' via the sub-screen 730 to the left of the center screen 710.

In this manner, according to an embodiment, the electronic device 100 may output a screen based on a recommendation result received from the server 200, via the multi-view screen 700. Also, the electronic device 100 may output, as text information, a video signal corresponding to the recommendation result via the interface screen 520.

As a user may understand why particular content or channel is recommended, the user may feel as if the electronic device 100 or the server 200 knows the intention of the user.

Also, the user may conveniently select and use the recommended channel or content by using the four-direction keys of the control device 50.

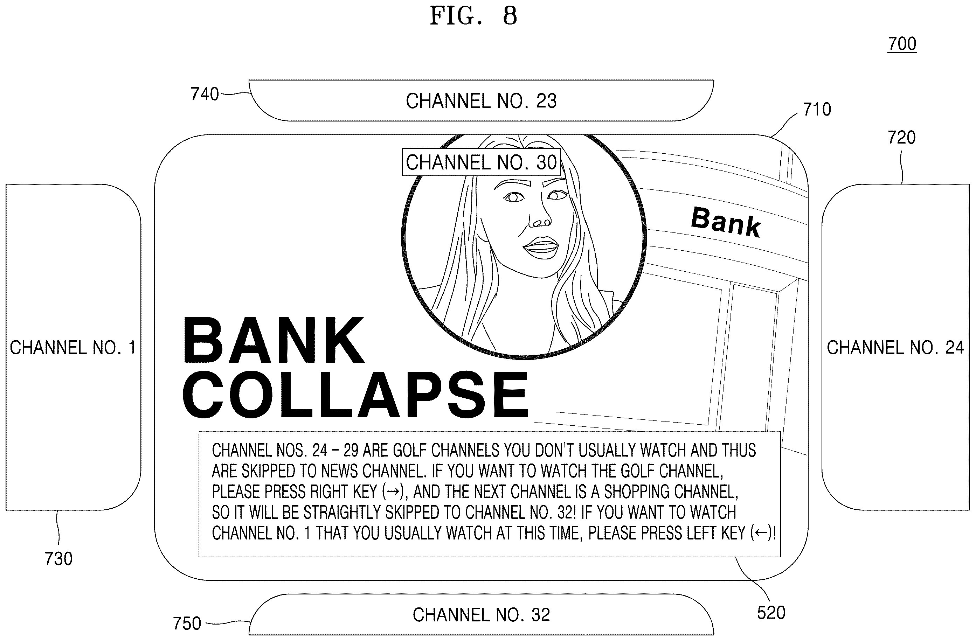

FIG. 8 illustrates a case in which the electronic device 100 outputs a video signal that is a recommendation result received from the server 200, according to an embodiment.

Referring to FIG. 8, as provided in the descriptions on FIG. 7, the electronic device 100 may output a video signal corresponding to a recommendation result to the multi-view screen 700.

For example, it is assumed that a user is watching a channel no. 23 but transmits, to the electronic device 100, a control signal for changing a channel to a next channel by selecting a channel change button of the control device 50.

In an embodiment, based on the control signal for requesting execution of a channel change function being received from the control device 50, the electronic device 100 may transmit request information to the server 200 and may receive, from the server 200, a recommendation result obtained based on the request information.

In an embodiment, the server 200 may transmit four recommended channels to the electronic device 100. In an embodiment, the electronic device 100 may generate and output a multi-view screen including a channel watched by the user and the four recommended channels recommended by the server 200 as respective sub-screens.

In an embodiment, the electronic device 100 may provide the recommendation result via four sub-screens that match four-direction keys included in the control device 50. In this case, the user may conveniently select each sub-screen at each location matching each button, by selecting a center button, and left, right, up, and down buttons of the four-direction keys included in the control device 50.

In an embodiment, the electronic device 100 may output the channel no. 23 watched by the user, via the sub-screen 740 above the center screen 710.

In an embodiment, the electronic device 100 may output a channel no. 24 that is a next channel of the channel no. 23 watched by the user, via the sub-screen 720 to the right of the center screen 710.

In an embodiment, the server 200 may identify a channel that the user usually does not watch but skips, based on user information included in the request information. For example, it is assumed that the server 200 has identified, based on the user information, that the user did not usually watch but skipped channel nos. 24 to 29 that are golf channels. When the user requests channel-up, the server 200 may skip the channel no. 24 that is a next channel up to the channel no. 29, based on the channel no. 23 watched by the user, and may transmit a channel no. 30 as a recommendation result to the electronic device 100.

In an embodiment, the electronic device 100 may output the channel no. 30 based on the recommendation result, via the center screen 710. For example, the electronic device 100 may output metadata related to the channel no. 30, an image or a preview video related to the channel no. 30, etc. via the center screen 710.

Also, in an embodiment, the server 200 may identify that the user does not usually watch a shopping channel, based on the user information included in the request information. Also, the server 200 may identify that a channel no. 31 is a shopping channel. The server 200 may skip the channel no. 31 as a channel next to the channel no. 30, and may obtain a channel no. 32 as the recommendation result. The electronic device 100 may output the channel no. 32 that is a next recommended channel, via the screen 750 below the center screen 710.

In an embodiment, the electronic device 100 may output skipped channels via the sub-screen 720 in the right. Also, the electronic device 100 may output, as the recommendation result, a channel no. 1 that the user usually watches in the same time zone as the current time, via the sub-screen 730 in the left.

In an embodiment, the electronic device 100 may output text information including conversations corresponding to the recommendation result, along with the multi-view screen.

In an embodiment, the electronic device 100 may output the text information indicating a reason of recommending a corresponding channel or content, via the interface screen 520 included in one area of the center screen 710. For example, as shown in FIG. 8, the electronic device 100 may output a reason of skipping channels, as in "Channel nos. 24 to 29 are golf channels that you usually do not watch". Also, the electronic device 100 may output a reason of skipping the channel no. 32 that is a shopping channel, as in "Next channel is a shopping channel, and thus, is skipped". The user views the recommendation reason, and may easily understand why a corresponding channel has been skipped.

In this manner, according to an embodiment, when a user selects the channel change button by using the control device 50, the server 200 may distinguish between a user's not-preferred channel and a user's preferred channel, based on user information, and may transmit a recommendation result corresponding thereto to the electronic device 100. The electronic device 100 may automatically skip a channel that the user usually does not watch and recommend a channel that the user might watch, thereby satisfying a user's need.

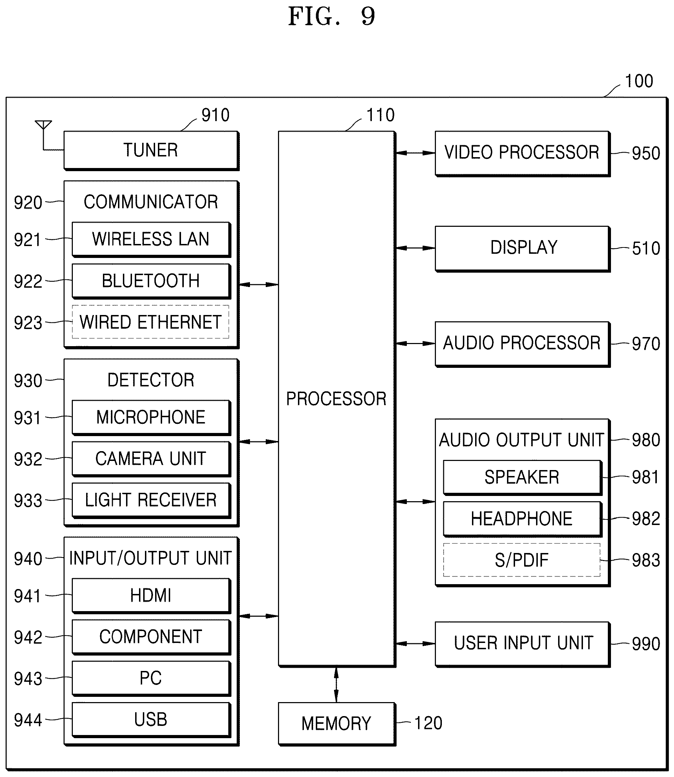

FIG. 9 is a block diagram of the electronic device 100 according to an embodiment.

The electronic device 100 of FIG. 9 may be an example of the electronic device 100 in any one of FIGS. 1 to 4. Hereinafter, descriptions overlapping the content provided with reference to FIGS. 1 to 4 are not provided here.

Referring to FIG. 9, the electronic device 100 may include the processor 110 and the memory 120. The processor 110 and the memory 120 included in the electronic device 100 perform the same operations as the processor 110 and the memory 120 included in the electronic device 100 of FIG. 2, and thus, same reference numerals are used.

In an embodiment, the electronic device 100 may include the processor 110 and the memory 120, and may further include a tuner 910, a communicator 920, a detector 930, an input/output unit 940, a video processor 950, the display 510, an audio processor 970, an audio output unit 980, and a user input unit 990.

The tuner 910 may tune and then select only a frequency of a channel that is to be received by the electronic device 100 from among many radio wave components via amplification, mixing, resonance, or the like of broadcast content in a wired or wireless manner. The content received via the tuner 910 may be decoded and divided into audio, video, and/or auxiliary information. The divided audio, video, and/or auxiliary information may be stored in the memory 120 under the control of the processor 110.

The communicator 920 may include at least one communication module capable of performing communication, according to the performance and structure of the electronic device 100. The communicator 920 may include at least one of a wireless local area network (LAN) module 921, a Bluetooth module 922, and wired Ethernet 923.

The wireless LAN module 921 may transmit or receive a Wi-Fi signal to or from neighboring devices, according to the Wi-Fi communication standard.

The Bluetooth module 922 may receive a Bluetooth signal transmitted from neighboring devices according to the Bluetooth communication standard. The Bluetooth module 922 may correspond to a Bluetooth low energy (BLE) communication module, and may receive a BLE signal. The Bluetooth module 922 may constantly or temporarily scan a BLE signal so as to detect whether a BLE signal is received.

In an embodiment, the communicator 920 may connect the electronic device 100 to a peripheral device, an external device, the server 200, etc., under the control of the processor 110. In an embodiment, by using a wired or wireless communication network, the communicator 920 may transmit request information generated by the electronic device 100 to the server 200, and may receive, from the server 200, a recommendation result obtained based on the request information.

In an embodiment, the communicator 920 may transmit and receive information to and from the server 200 by using web socket protocol-based communication or HyperText Transfer Protocol (HTTP)-based communication. In an embodiment, the electronic device 100 may configure a message in the form of a message template class object provided by a JavaScript Object Notation (JSON) object, but the present disclosure is not limited thereto. The communicator 920 may be configured to transmit, to the server 200, a text-based payload in a JSON or XML format that includes conversational text information, and to receive a result payload from the server 200.

The detector 930 may detect speech of a user, an image of the user, or an interaction with the user and may include a microphone 931, a camera unit 932, and a light receiver 933.

When a user transmits a control signal to the electronic device 100 via the control device 50, the microphone 931 may receive an audio signal including uttered speech of the user or noise, may convert the received audio signal into an electrical signal, and may output the electrical signal to the processor 110.

The camera unit 932 may include a sensor (not shown) and a lens (not shown), and may capture an image formed on a screen and transmit the image to the processor 110.

The light receiver 933 may receive an optical signal (including a control signal). The light receiver 933 may receive an optical signal corresponding to a user input (e.g., a touch, a press, a touch gesture, a speech, or a motion) from the control device 50 such as a remote controller or a mobile phone.

The input/output unit 940 may receive a video (e.g., a dynamic image signal or a still image signal), audio (e.g., a speech signal or a music signal), and additional information from an external device under the control of the processor 110.

The input/output unit 940 may include one of a HDMI port 941, a component jack 942, a PC port 943, and a USB port 944. The input/output unit 940 may include a combination of the HDMI port 941, the component jack 942, the PC port 943, and the USB port 944.

The video processor 950 may process image data to be displayed by the display 510 and may perform, on the image data, various image processing operations such as decoding, rendering, scaling, noise cancellation, frame rate conversion, and resolution conversion.

The display 510 may output, on the screen, content received from a broadcasting station, content received from an external server or an external device such as an external storage medium, or content provided by various applications such as an OTT service provider or a metaverse content provider. The content is a media signal and may include a video signal, an image, a text signal, or the like.

In an embodiment, the display 510 may output a video signal that corresponds to a recommendation result. The video signal that corresponds to the recommendation result may include text information including conversations.

The audio processor 970 performs processing on audio data. The audio processor 970 may perform various types of processing including decoding, amplification, noise cancellation, etc. on audio data.

The audio output unit 980 may output audio included in content received via the tuner 910, audio input via the communicator 920 or the input/output unit 940, and audio stored in the memory 120, under the control of the processor 110. The audio output unit 980 may include at least one of a speaker 981, a headphone 982, or a Sony/Philips digital interface (S/PDIF) output terminal 983.

In an embodiment, the audio output unit 980 may output an audio signal that corresponds to the recommendation result. In an embodiment, as the audio output unit 980 outputs the audio signal that corresponds to the recommendation result, a volume of a currently-output audio signal may be adjusted.

The user input unit 990 may receive a user input for controlling the electronic device 100. The user input unit 990 may include a user input device with various types including a touch panel for detecting a touch of the user, a button for receiving a push manipulation of the user, a wheel for receiving a rotation manipulation of the user, a keyboard, a dome switch, a microphone for voice recognition, a motion detection sensor for sensing a motion, or the like, but the present disclosure is not limited thereto.

In an embodiment, a user may transmit a control signal to the user input unit 990 via a key input arranged at the control device 50, a speech input via a microphone arranged at the control device 50, or a gesture input via a motion sensor arranged at the control device 50, by using the control device 50. Alternatively, when the control device 50 is an electronic device such as a smartphone or an Al speaker which performs other operation as a main function, other than an operation of controlling the electronic device 100, the user may transmit a control signal to the user input unit 990 via a remote controller application installed in the control device 50.

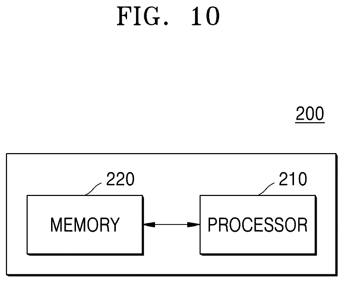

FIG. 10 is a block diagram of the server 200 according to an embodiment.

The server 200 of FIG. 10 may be an example of the server 200 of FIG. 1.

In an embodiment, the server 200 may include a processor 210 and memory 220.

In an embodiment, the memory 220 may store at least one instruction. The memory 220 may store at least one program to be executed by the processor 210. Also, the memory 220 may store data input to the server 200 or output from the server 200.

The memory 220 may include at least one type of storage medium from among flash memory, a hard disk, a multimedia card micro, a memory card (e.g., a secure digital (SD) or extreme digital (XD) memory card), random access memory (RAM), static random access memory (SRAM), read-only memory (ROM), electrically erasable programmable read-only memory (EEPROM), programmable read-only memory (PROM), magnetic memory, a magnetic disk, and an optical disc.

The processor 210 according to an embodiment controls all operations of the server 200. The processor 210 may execute one or more instructions stored in the memory 220 to control the server 200 to operate. In an embodiment, the processor 210 may include one or more processors.

In an embodiment, the processor 210 may store at least one neural network. In an embodiment, the processor 210 may generate output data from input data by using one or more neural networks. Alternatively, the memory 220 other than the processor 210 may store a neural network, i.e., an Al model.

In an embodiment, the one or more processors 210 may implement an Al system to an Al technology by using the neural network stored in the processor 210 and/or the memory 220.

The Al system is a computer system that implements human-level intelligence and allows a machine to learn by itself, and as the Al system is more used, the recognition rate of the Al system is improved.

The Al technology includes machine-learning (e.g., deep-learning) technology that uses an algorithm for classifying/learning features of input data by itself, and element technologies for copying cognition and decision functions of the human brain via a machine-learning algorithm.

The element technologies may include at least one of language understanding technology for recognizing human languages/characters, visual understanding technology for recognizing objects like human vision, inference/prediction technology for determining information and performing logical inference and prediction, knowledge representation technology for processing human experience information to knowledge data, and motion control technology for controlling autonomous driving of vehicles or the motion of robots.

The AI technology may be implemented by using an algorithm. Here, an algorithm or a set of algorithms for implementing the Al technology is refer to as a neural network. The neural network may receive input data, may perform computations for analysis and classification, and thus, may output result data. In order for the neural network to accurately output the resulting data corresponding to the input data, it is necessary to train the neural network. Here, the term 'training' may refer to training a neural network such that the neural network may discover or learn on its own a method of analyzing various pieces of data input to the neural network, a method of classifying the input pieces of data, and/or a method of extracting, from the input pieces of data, features necessary for generating result data. Training a neural network means that an Al model with desired characteristics is generated by applying a learning algorithm to a plurality of pieces of training data. In an embodiment, such training may be performed by the server 200 that performs AI, or may be performed by a separate server/system.

Here, the learning algorithm is a method of training a preset target device (e.g., a robot) by using a plurality of pieces of training data so as to allow the target device to make a decision or make a prediction by itself. Examples of the learning algorithm include supervised learning, unsupervised learning, semi-supervised learning, or reinforcement learning, and a learning algorithm in an embodiment is not limited to the above-described examples except in cases in which it is specified.

A set of algorithms for outputting output data corresponding to input data via the neural network, or software and/or hardware for executing the set of algorithms may be referred to as an 'AI model' (or an 'artificial intelligence model', a 'neural network model', or a 'neural network').

In an embodiment, the one or more processors 210 may process input data according to predefined operation rules or an Al model. The predefined operation rules or AI model may be generated by using a particular algorithm. Also, the AI model may be trained to perform a particular algorithm. The processor 210 may generate output data corresponding to input data via the Al model.

In an embodiment, the neural network that the processor 210 uses may be a generative AI model.

Generative Al is a model configured to generate similar content by learning existing content including text, voice, image, or the like. The generative AI refers to an AI technology that generates new data with which communication with human is available, beyond a level of classifying and recognizing a class by being trained on patterns about input content. The generative AI technology has been rapidly developed by using a hyper-scale Al technology.

A hyper-scale Al model indicates a model trained on a large amount of data.

In an embodiment, training data may include various types of request information receivable from the electronic device 100, various functions or operations executable by the electronic device 100, and various types of content, programs, channels, and metadata about them outputtable by the electronic device 100.

In an embodiment, the server 200 may receive request information from the electronic device 100. In an embodiment, the one or more processors 210 may obtain, by using one or more neural networks, a recommendation result corresponding to the request information.

In an embodiment, the one or more neural networks may obtain the recommendation result by using an inference prediction technology. The inference prediction technology refers to a technology for determining information, performing logical inference, and performing prediction, and may include a knowledge/probability-based inference, optimization prediction, preference-based planning, recommendation, etc.

In an embodiment, the recommendation result that the server 200 obtains by using the Al model may be information including output conversations.

In an embodiment, the one or more processors 210 may obtain a recommendation reason along with the recommendation result by using the Al model. In an embodiment, the server 200 may transmit the recommendation result including the recommendation reason to the electronic device 100.

In an embodiment, the one or more processors 210 may obtain additional information. In an embodiment, the additional information may be information that the server 200 collects to provide the electronic device 100 with a more appropriate recommendation result. For example, the additional information may include at least one of metadata corresponding to content, popular content, curated content, content selected based on particular theme, and key performance index (KPI) information.

In an embodiment, the one or more processors 210 may obtain user information. The user information may include a user profile, setting information, and at least one of a user-preferred channel or content, a user-preferred genre, and a viewing history for each user or each electronic device.

In an embodiment, the one or more processors 210 may input the request information along with at least one of the additional information and the user information to the one or more neural networks, and thus, may obtain, from the one or more neural networks, the request information and a recommendation result based on at least one of the additional information and the user information.

In an embodiment, the server 200 may input candidate information that may become the recommendation reason, to the one or more neural networks. The candidate information that may become the recommendation reason refers to information having possibility of a relation to the recommendation result, and may include user's preference, a user's viewing history, user setting information, a channel or content which is popular to the public, or the like.

In an embodiment, the one or more neural networks that the one or more processors 210 use may include a plurality of theme-specific neural networks. The neural networks for the respective themes may refer to an Al model trained on training data of different themes.

In an embodiment, the neural networks for the respective themes may include at least one of a channel change theme, a customized theme, a popular content theme, a curation theme, a fan theme, a KPI theme, and various themes that a generative Al model may propose, e.g., a theme trained on a Wednesday drama, a Friday and Saturday drama, entertainment, the 90s movies, classic movies, etc.

In an embodiment, the one or more processors 210 may input information corresponding to the neural networks for the respective themes to the neural networks for the respective themes, the information being obtained based on the request information received from the electronic device 100. Alternatively, in an embodiment, the one or more processors 210 may input information obtained based on the request information received from the electronic device 100 only to one or more neural networks selected from the neural networks for the respective themes.

In an embodiment, the one or more processors 210 may obtain a recommendation result from at least one of the neural networks for the respective themes. In an embodiment, when the one or more processors 210 obtain recommendation results from the neural networks for the respective themes, the one or more processors 210 may obtain a final recommendation result by aggregating the recommendation results.

In an embodiment, when the one or more processors 210 may generate, as the recommendation result, at least one of an operation executable by the electronic device 100, information about a channel or content outputtable by the electronic device 100, and a recommendation reason.

In an embodiment, the recommendation result may further include information corresponding to an additional function executable by the electronic device 100. The information corresponding to the additional function executable by the electronic device 100 may include information instructing an additional operation.

In an embodiment, the one or more processors 210 may transmit the recommendation result to the electronic device 100.

As described above, according to an embodiment, the server 200 may generate, by using one or more hyper-scale Al models, the recommendation result including conversations which corresponds to a recommendation request transmitted from the electronic device 100.

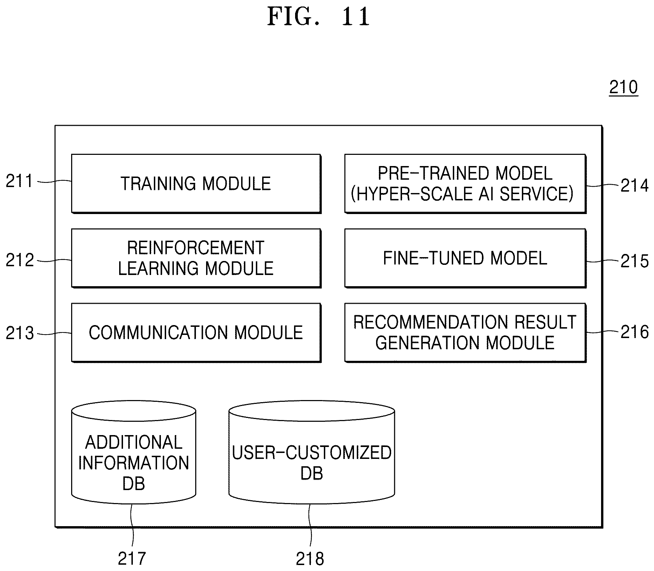

FIG. 11 is a block diagram of the server 200 according to an embodiment.

In an embodiment, the server 200 may include a training module 211, a reinforcement learning module 212, a communication module 213, a pre-trained model 214, a fine-tuned model 215, a recommendation result generation module 216, an additional information DB 217, and a user-customized DB 218.

In an embodiment, each module included in the server 200 may refer to a functional and structural combination of hardware for performing the technical concept of the present disclosure and software for operating the hardware. For example, the module may indicate preset code and a logic unit of a hardware resource for performing the preset code, but does not necessarily indicate physically connected code or one type of hardware.

In an embodiment, the server 200 may collect additional information so as to provide a more appropriate recommendation result. The additional information DB 217 according to an embodiment may be a DB that stores additional information.

In an embodiment, the additional information may include at least one of metadata corresponding to content, popular content, curated content, content selected based on particular theme, and KPI information.

For example, when the electronic device 100 is a TV, the additional information may include metadata corresponding to all programs or content which may be broadcast via the TV, i.e., the additional information about the programs or the content. For example, the additional information may include EPG information about all programs or contents, program schedule information, a program schedule, a title, a material, casting, a director, award-winning or not, ratings, etc. of a program or content, a preview video, a thumbnail image, etc. of a program or content, etc.

In an embodiment, the server 200 may directly obtain and collect the additional information from an external content provider, an OTT service provider, a broadcasting station, or the like.

In an embodiment, the additional information obtained by the server 200 may overlap information included in request information received from the electronic device 100. In this regard, the overlapping information may be information obtained from the same source or may be information obtained from different sources. For example, the request information generated by the electronic device 100 may include metadata corresponding to particular content, e.g., metadata corresponding to first content. Here, the electronic device 100 may have obtained the metadata corresponding to first content from metadata included in a broadcast stream received from a broadcasting station. On the other hand, the server 200 may obtain the metadata corresponding to first content from an OTT service provider other than the broadcasting station, and may use it as the additional information.

According to an embodiment, the user-customized DB 218 may store user information. The user-customized DB 218 may store a history of selection made by a user or the electronic device 100 for each user, e.g., for each user account or each electronic device 100, e.g., an IP address of the electronic device 100 or an account dedicated to the electronic device 100. In an embodiment, the server 200 may allow user information to be applied to a recommendation result, based on a past history stored in the user-customized DB 218. Past history data stored in the user-customized DB 218 may be updated at a time when user feedback is received from the electronic device 100.

According to an embodiment, the pre-trained model 214 may be an Al model capable of recognizing and generating a conversation. In an embodiment, the pre-trained model 214 may be a known hyper-scale Al such as ChatGPT, GPT4.0, etc., or may be a hyper-scale Al to be developed at a later time.

In an embodiment, the pre-trained model 214 may be a hyper-scale learning model trained on a large amount of training data, and may be a model having capability of processing and analyzing a large amount of data with high accuracy. For example, the pre-trained model 214 may be a model with millions to hundreds of billions of parameters.

According to an embodiment, the training module 211 may be a module to train an Al model to obtain a desired result via a neural network. The training module 211 may train the pre-trained model 214 by using a large amount of training data so as to obtain a recommendation result. The training module 211 may train the pre-trained model 214, and thus, may set values of a plurality of weights respectively applied to a plurality of nodes forming the neural network. Here, a weight may indicate connection strength between nodes of the neural network. A weight value may be optimized through iterative training, and a result accuracy may be repeatedly modified until the result accuracy satisfies a preset reliability. The training module 211 may train the pre-trained model 214, and thus, may generate the fine-tuned model 215 having a finally-set weight value.

In an embodiment, the training module 211 may allow the pre-trained model 214 to learn an input conversation. In an embodiment, the training module 211 may train the pre-trained model 214 to learn various recommendation request conversations receivable from the electronic device 100. In an embodiment, the training module 211 may input request information for each of various situations receivable from the electronic device 100, and may train the pre-trained model 214 to obtain a recommendation result corresponding to the request information from the pre-trained model 214.

In an embodiment, the training module 211 may train a model by adjusting a training cycle of the pre-trained model 214, according to a training speed. For example, when it takes one week in training, the training module 211 may train the pre-trained model 214 at one-week intervals.

According to an embodiment, the fine-tuned model 215 may be a model generated by continuously training the pre-trained model 214. The fine-tuned model 215 may be continuously trained on added training data. In an embodiment, the fine-tuned model 215 may be specified to be an appropriate model to generate a recommendation result according to an embodiment, by being additionally trained on data used in a domain of the electronic device 100, user-customized data, etc.

In an embodiment, the fine-tuned model 215 may be tuned as a model capable of generating a recommendation result further matching user's intention, by being continuously trained on additional information included in the additional information DB 217, user history data included in the user-customized DB 218, a user feedback result, etc.

According to an embodiment, the reinforcement learning module 212 may be a module for learning a user feedback. In an embodiment, the reinforcement learning module 212 may be a module for additionally learning feedback on a recommendation result obtained by the fine-tuned model 215, the feedback being provided by a user. In an embodiment, the reinforcement learning module 212 may continuously train the fine-tuned model 215, based on the additional information included in the additional information DB 217, the user history data included in the user-customized DB 218, the user feedback result, etc.

In an embodiment, as the training module 211 does, the reinforcement learning module 212 may train a model by setting a cycle, according to a training speed. In an embodiment, the reinforcement learning module 212 may train the model by applying additional information, a user input, user feedback data, or the like to the model, according to a cycle in which the additional information DB 217 or the user-customized DB 218 is updated, a cycle in which user feedback is received, or the like.

According to an embodiment, the communication module 213 may be a module capable of performing communication with the communicator 920 of the electronic device 100. In an embodiment, the communication module 213 may provide an application programming interface (API) capable of having a conversation with a client via network communication.

The communication module 213 may include at least one of a WLAN module, a Bluetooth module, and wired Ethernet. In an embodiment, by using a wired or wireless communication network, the communication module 213 may receive request information from the electronic device 100 and may transmit, to the electronic device 100, a recommendation result that is based on the request information and is generated by the server 200.

In an embodiment, the communication module 213 may transmit and receive information to and from the electronic device 100 by using web socket protocol-based communication or HTTP-based communication. The communication module 213 may transmit and receive text-based JSON or payload in XML form so as to transmit and receive text information including conversations to and from the electronic device 100.

According to an embodiment, the recommendation result generation module 216 may be a module for generating a recommendation result by using the fine-tuned model 215 that is most-recently trained.

In an embodiment, the recommendation result generation module 216 may input request information to the fine-tuned model 215 and may obtain a recommendation result corresponding to the request information.

In an embodiment, the fine-tuned model 215 may include a plurality of theme-specific neural networks. In an embodiment, when the fine-tuned model 215 includes a plurality of theme-specific neural networks, the recommendation result generation module 216 may obtain a plurality of recommendation results by using the neural networks for the respective themes. In an embodiment, the recommendation result generation module 216 may obtain a final recommendation result by aggregating the plurality of recommendation results obtained from the neural networks for the respective themes.

In an embodiment, the recommendation result generation module 216 may obtain additional information from the additional information DB 217, and may obtain user information from the user-customized DB 218. In an embodiment, the recommendation result generation module 216 may input request information along with additional information and user information to the fine-tuned model 215, and may obtain a recommendation result from the fine-tuned model 215.

In an embodiment, the recommendation result may include information about various types of content, programs, channels, etc. which are outputtable by the electronic device 100. In an embodiment, the recommendation result may include a broadcasting station channel in which a recommended channel, recommended content, a recommended program, etc. is available, a URL address indicating a particular space on an external server or an external OTT service provider server in which content, etc. is stored, metadata indicating auxiliary information about a recommended channel, content, or a program, an advertisement video, a preview video, a thumbnail, etc. about a recommended channel, content, or a program.

In an embodiment, the recommendation result generation module 216 may generate, as a recommendation result, an operation executable by the electronic device 100. For example, the recommendation result generation module 216 may obtain, as the recommendation result, guide information about an operation for a multi-device experience (MDE) executable by the electronic device 100.

In an embodiment, the recommendation result generation module 216 may also obtain a recommendation reason as the recommendation result. In an embodiment, the recommendation reason may be information for describing a reason of recommending the operation executable by the electronic device 100, or a reason of recommending a particular channel, content, or a program.

In an embodiment, the recommendation result generation module 216 may generate the recommendation result including conversations. In an embodiment, the recommendation result generation module 216 may output the recommendation result by including the recommendation reason in the recommendation result. For example, when the recommendation result generation module 216 outputs the recommendation result as metadata about four channels, content, etc., the recommendation result generation module 216 may generate the recommendation result along with a reason of recommending at least one of the four channels or the content.

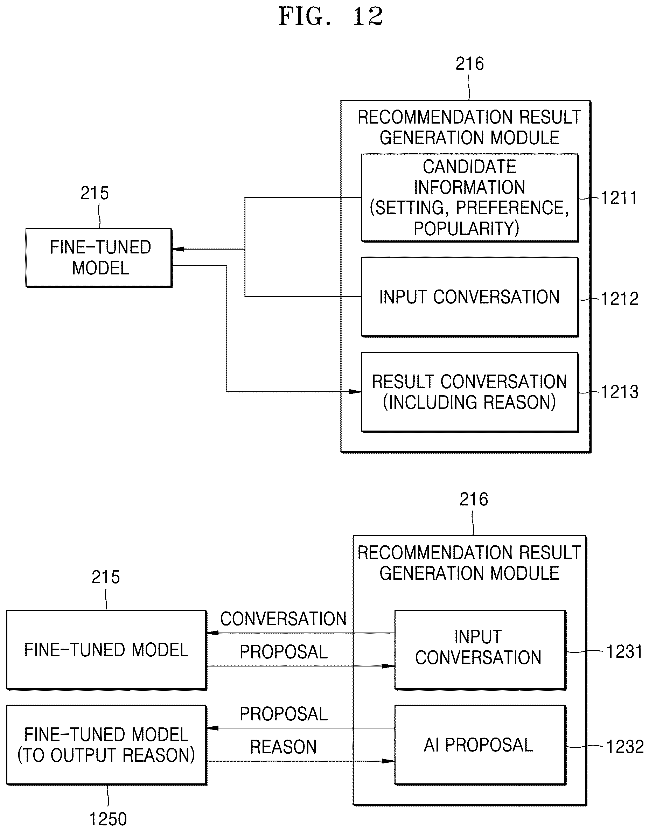

FIG. 12 illustrates a case in which the server 200 obtains both a recommendation result and a recommendation reason, according to an embodiment.

Referring to diagrams in the left of FIG. 12, the recommendation result generation module 216 may input request information to the fine-tuned model 215. In an embodiment, the recommendation result generation module 216 may input an input conversation 1212 as the request information to the fine-tuned model 215.

In an embodiment, the recommendation result generation module 216 may obtain candidate information 1211. The candidate information 1211 indicates candidates having possibility of a recommendation reason by having possibility of a relation to the recommendation result, and may include various pieces of information a user's preferred genre or a user's not-preferred genre which may be identified from an EPG, a program schedule table, user information stored in a user-customized DB, etc., a user's preferred or not-preferred channel or program, programs or contents which are popular to people having a similar profile, in consideration of a user's viewing tendency, user's age, a region where the user lives, user's family relationships, etc., or programs or contents which are generally popular to people, without consideration of a user's profile.

In an embodiment, the recommendation result generation module 216 may input the input conversation 1212 along with the candidate information 1211 to the fine-tuned model 215.

In an embodiment, the fine-tuned model 215 may be a neural network trained to receive an input of the input conversation 1212 along with the candidate information 1211 that may correspond to a recommendation result, and to obtain a recommendation result by considering both the input conversation 1212 and the candidate information 1211.

In an embodiment, the fine-tuned model 215 may obtain a recommendation result including a result conversation 1213. For example, when the fine-tuned model 215 recommends particular content, the fine-tuned model 215 may obtain a recommendation reason as to the reason why the content is recommended is because a genre of the content is a user's preferred genre, the content is succeeding content of content the user previously watched, the content is currently available content based on EPG information, the content is popular content to people of similar age and gender to the user, the content is content related to theme that is most popular to people, or the like.

In an embodiment, when the fine-tuned model 215 obtains the recommendation result, the fine-tuned model 215 may identify which category's candidate information the recommendation result is related to among a plurality of pieces of candidate information of various categories included in the candidate information 1211. In an embodiment, when the fine-tuned model 215 may score relevance or a matching level between the recommendation result and candidate information of each of various categories included in the candidate information 1211. For example, it is assumed that the fine-tuned model 215 obtained a relevance score between recommended content and content a user has watched as a score of 90, a relevance score between the recommended content and a user's preferred genre as a score of 70, and a relevance score between the recommended content and popularity to people as a score of 30, respectively.

In an embodiment, when the fine-tuned model 215 may obtain, as a recommendation reason, candidate information having high priority from the candidate information 1211. The candidate information having high priority may be candidate information whose relevance score to the recommended content is high among the pieces of candidate information.

In an embodiment, the recommendation result generation module 216 may obtain, as the recommendation reason, one or more pieces of candidate information in order of priority. For example, the recommendation result generation module 216 may obtain, as the recommendation reason, a point that the recommended content has high relevance to content the user has watched, and a point that the recommended content is a user's preferred genre. The recommendation result generation module 216 may generate a result conversation 1213 including a reason why the content is recommended, such as "Recommended content is succeeding content of content the user previously watched. Also, it is recommended as it is an adventure genre that the user likes".

In another embodiment, referring to diagrams in the right of FIG. 12, the recommendation result generation module 216 may obtain a recommendation result by inputting only an input conversation 1231 to the fine-tuned model 215, without inputting candidate information. In an embodiment, the recommendation result generation module 216 may select, by using another neural network, a category having possibility of candidate information related to a recommendation reason among a plurality of categories. The other neural network may select the category having possibility of candidate information, and may obtain a result thereof as an Al proposal 1232.

In an embodiment, the recommendation result generation module 216 may input the Al proposal 1232 to a fine-tuned model 1250 that is configured to output a reason and is different from the fine-tuned model 215. The fine-tuned model 1250 configured to output a reason may receive an input of the Al proposal 1232 and may obtain, as a recommendation reason, candidate information being from the Al proposal 1232 and having high relevance to a recommendation result.

In an embodiment, the recommendation result generation module 216 may obtain the recommendation result from the fine-tuned model 215, and may obtain the recommendation reason from the fine-tuned model 1250 that is another model configured to output. The recommendation result generation module 216 may aggregate the recommendation result and the recommendation reason, thereby generating a recommendation result in the form including the recommendation reason.

In this manner, according to an embodiment, the server 200 may input request information along with candidate information having possibility of a recommendation reason to the same or separate generative Al model, and thus, may obtain a recommendation result and a recommendation reason integrally or separately from the generative Al model. The server 200 obtains and transmits a recommendation result including a recommendation reason to the electronic device 100, thereby describing a user the reason why particular content or program, a particular operation, etc. is recommended.

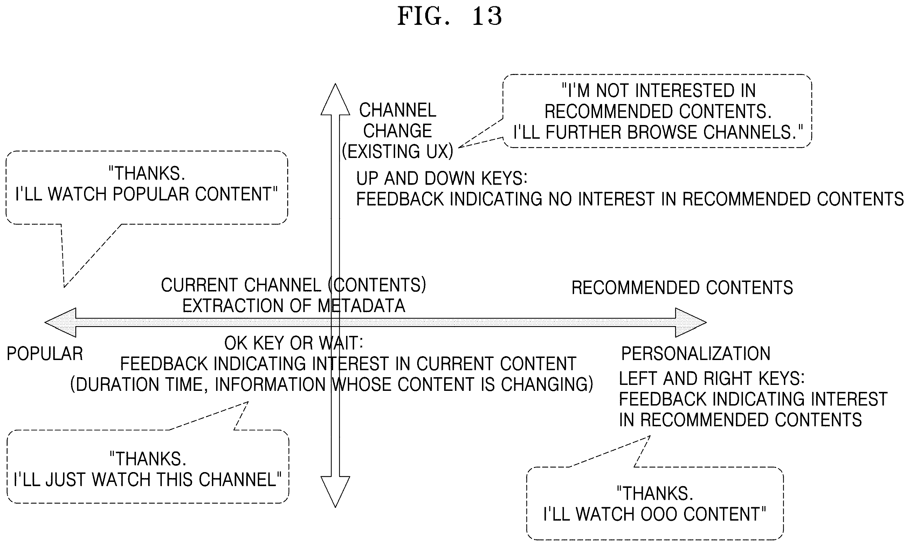

FIG. 13 illustrates a case in which the server 200 generates a recommendation result by using a consistent method, according to an embodiment.

In an embodiment, the server 200 may obtain a recommendation result, in response to request information from the electronic device 100. In an embodiment, the server 200 may obtain the recommendation result by using a consistent method, and may transmit the recommendation result to the electronic device 100.

The electronic device 100 may configure a multi-view screen, based on the recommendation result received from the server 200, and may output an image, metadata, etc. of a channel or content corresponding to the recommendation result received from the server 200, via a plurality of sub-screens included in the multi-view screen.

In an embodiment, the electronic device 100 may determine which recommendation result is to be output via which sub-screen in the multi-view screen. Alternatively, the server 200 may determine which recommendation result is to be output via which sub-screen in the multi-view screen, and may inform the electronic device 100 of the determination.

Referring to FIG. 13, the server 200 or the electronic device 100 may allow content according to a channel change to be output via up and bottom sub-screens in the multi-view screen, and may allow recommended content to be output via left and right sub-screens.

A user may select any one screen from the multi-view screen by using the four-direction keys included in the control device 50.

For example, when the user selects the up or bottom sub-screen from the multi-view screen, the server 200 may determine that the user does not have interest in content recommendation and has interest in channel browsing. Based on the user selecting the up or bottom sub-screen from the multi-view screen, the server 200 may continuously and consistently transmit, to the electronic device 100, a next channel or a previous channel with reference to a current channel. While the user views the recommendation result recommended by using the consistent method via the multi-view screen, the user may select the up or bottom sub-screen from the multi-view screen by using the four-direction keys included in the control device 50, and thus, may easily select and use a next channel or a previous channel.

Also, when the user selects the left or right sub-screen from the multi-view screen, the server 200 may determine that the user does not have interest in channel browsing but has interest in recommended content. Based on the user selecting the left or right sub-screen from the multi-view screen, the server 200 may continuously search for recommended content with reference to content currently output via a center sub-screen, and may transmit a recommendation result to the electronic device 100. For example, when the user selects a left sub-screen from the multi-view screen, the server 200 may determine that the user searches for content popular to people, may continuously obtain content popular to people as a recommendation result, and may allow the recommendation result to be output via the left sub-screen of the multi-view screen.

Equally, for example, when the user selects a right sub-screen from the multi-view screen, the server 200 may determine that the user searches for user-customized content rather than content popular to people, may continuously obtain user-customized content as a recommendation result, and may allow the recommendation result to be output via the right sub-screen of the multi-view screen.

In an embodiment, which sub-screen is selected from a multi-view screen by a user using the control device 50 may be stored as a user history in a user-customized DB, and then, when the server 200 recommends content, it may be used to identify user's preference, or the like.

While a user views a recommendation result based on a consistent method via a multi-view screen, the user may select a particular sub-screen by using the four-direction keys included in the control device 50 and may use it.

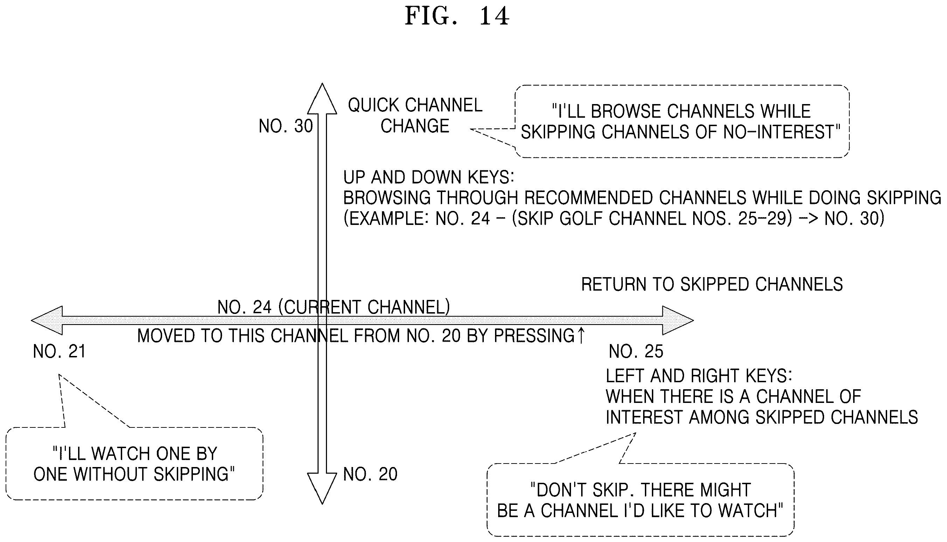

FIG. 14 illustrates a case in which the server 200 generates a recommendation result by using a consistent method, according to an embodiment.

For example, it is assumed that a user selects a channel-up button by using the control device 50 while the electronic device 100 is outputting a channel no. 20. Based on the channel-up button being received from the control device 50, the electronic device 100 may generate and transmit request information to the server 200.

In an embodiment, the server 200 may obtain a recommendation result by using a consistent method, and may transmit the recommendation result to the electronic device 100. For example, the server 200 may allow only user-interest channels to be output via up and bottom sub-screens of a multi-view screen and may allow skipped channels to be output via left and right sub-screens.

A user may select any one screen from the multi-view screen by using the four-direction keys included in the control device 50. For example, when the user selects the up or bottom sub-screen from the multi-view screen, the server 200 may determine that the user attempts to browse only channels of interest while skipping channels of no-interest. Based on the user selecting the up or bottom sub-screen from the multi-view screen, the server 200 may continuously and consistently skip channels of no-interest with reference to a current channel. The server 200 may recommend only channels that the user might have interest via the up or bottom sub-screen of the multi-view screen.

Alternatively, when the user selects the left or right sub-screen from the multi-view screen, the server 200 may determine that the user does not have interest in fast channel browsing and attempts to browse a channel one by one without skipping channels. Based on the user selecting the up or bottom sub-screen from the multi-view screen, the server 200 may allow a next channel or a previous channel to be continuously output via the left and right sub-screens with reference to a current channel being output via a center sub-screen.

In an embodiment, which sub-screen is selected from a multi-view screen by a user using the control device 50 may be stored as a user history in a user-customized DB, and then, when the server 200 recommends a channel, it may be used.

In this manner, according to an embodiment, the server 200 may generate a recommendation result based on a consistent method. While a user views a recommendation result based on a consistent method via a multi-view screen, the user may easily use a desired result by using the four-direction keys included in the control device 50.

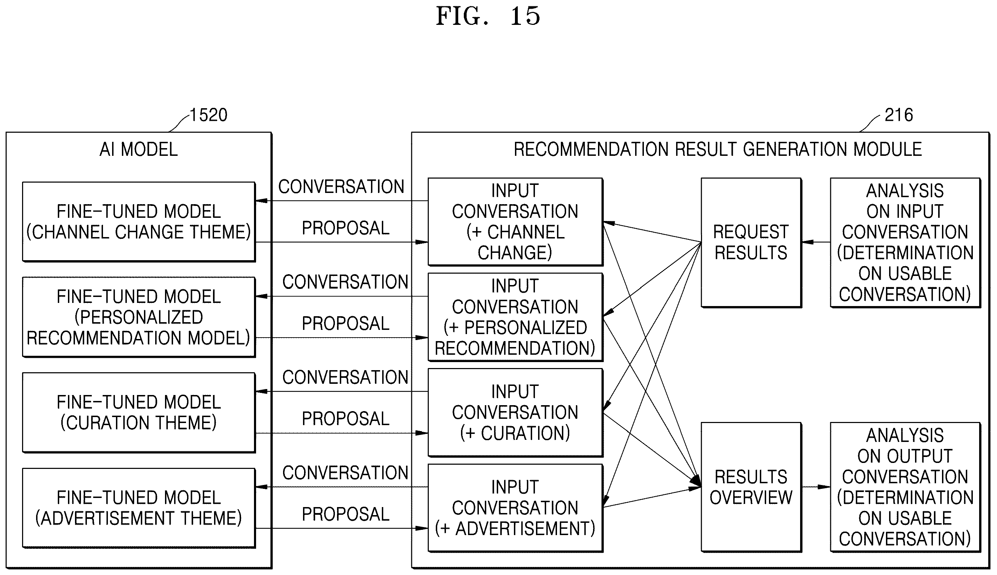

FIG. 15 is a diagram illustrating a case in which the server 200 obtains a recommendation result by using a plurality of theme-specific neural networks, according to an embodiment.

Referring to FIG. 15, in an embodiment, the server 200 may obtain a recommendation result by using an Al model 1520.

In an embodiment, the Al model 1520 used by the server 200 may include a plurality of theme-specific neural networks. In an embodiment, the plurality of theme-specific neural networks may be fine-tuned models that are respectively trained on training data of different themes.

In an embodiment, the plurality of theme-specific neural networks may be neural networks trained on training data of various themes. In an embodiment, the neural networks for various respective themes may have various forms including a channel change theme model trained on information about channels that a user frequently watches, a personalized theme model trained on a user's viewing history, preference, user setting information, etc., a popular content theme model trained on programs or content being popular to people, a fan theme model trained on content including a particular entertainer or cast, a KPI theme model trained on KPI information that is content information in the electronic device 100 which is collected by the server 200, the content information including a popular application, popular content, preferred menu, etc. of the electronic device 100, a model trained on various themes proposed by a generative Al model, e.g., an advertisement metal model trained on only advertisements, a theme model trained on a Wednesday drama, a Friday and Saturday drama, entertainment, the 90s movies, classic movies, etc. Also, the plurality of theme-specific neural networks may include a curation theme that an administrator provides by mapping a channel number and a particular channel. The curation theme may be a theme model trained on only a particular theme set by a server administrator, e.g., a program related to protection of the environment.

In an embodiment, the recommendation result generation module 216 may analyze an input conversation included in request information. In an embodiment, the recommendation result generation module 216 may interpret the meaning of text included in the request information by using a natural language understanding (NLU) technology, and may derive intention thereof. In an embodiment, when the request information is in the form of voice, not text, the recommendation result generation module 216 may analyze data by using both automatic speech recognition (ASR) and NLU.

In an embodiment, the recommendation result generation module 216 may obtain, as the input conversation, only usable conversations of information included in the request information. In an embodiment, the recommendation result generation module 216 may input the input conversation to each of the plurality of theme-specific neural networks.

Alternatively, in an embodiment, the recommendation result generation module 216 may determine to which theme of a neural network the input conversation is to be input among the plurality of theme-specific neural networks. In an embodiment, the recommendation result generation module 216 may select all or some of the plurality of theme-specific neural networks, in consideration of relevance to at least one of request information, additional information, and user information. The recommendation result generation module 216 may input the input conversation only to a neural network of a selected theme.

In an embodiment, the recommendation result generation module 216 may input the same input conversation to all the plurality of theme-specific neural networks or neural networks of selected themes.

Alternatively, in an embodiment, the recommendation result generation module 216 may modify the input conversation according to the neural network of the selected theme. For example, the recommendation result generation module 216 may not input the same input conversation to all the plurality of theme-specific neural networks but may modify the input conversation to be appropriate for a neural network for each theme. The recommendation result generation module 216 may obtain information corresponding to a neural network for each theme by modifying the input conversation, and may input the information corresponding to the neural network for each theme to the neural network for each theme.

A generative AI model may derive more exact result matching a question when it is questioned by using clear and simple keywords. Therefore, the recommendation result generation module 216 may not input all the input conversation to neural networks of all themes but may extract only an input conversation including materials matching each theme and may obtain an exact and simple input conversation matching a neural network of each theme.

In an embodiment, the recommendation result generation module 216 may classify text included in request information by using the NLU technology. For example, when request information related to user's preference is included in request information received from the electronic device 100, the recommendation result generation module 216 may analyze text included in the request information so as to identify only text related to the user's preference, not whole text included in the request information, and may obtain the identified text as input data to be input to a neural network trained on personalized theme.

For example, when the request information includes a request for a recommendation of an action movie being popular to people, the recommendation result generation module 216 may obtain, as input data, only text of the request for the recommendation of an action movie being popular to people, not all the request information, and may input the input data to a popular content theme.

In an embodiment, the recommendation result generation module 216 may obtain a plurality of recommendation results from a plurality of theme-specific neural networks. The recommendation result generation module 216 may obtain, as a final recommendation result, one or more recommendation results or recommend content in order of high scores among the plurality of recommendation results. A channel or content having high scores among a plurality of recommendation results may be a channel or content obtained in recommendation results in an overlapping manner from a plurality of theme-specific neural networks. Alternatively, the recommendation result generation module 216 may obtain a final recommendation result by applying a high weight to a channel or content obtained by a neural network of theme having high relevance to at least one of request information, additional information, and user information.

In this manner, according to an embodiment, the server 200 may obtain more exact recommendation result by using a plurality of theme-specific neural networks.

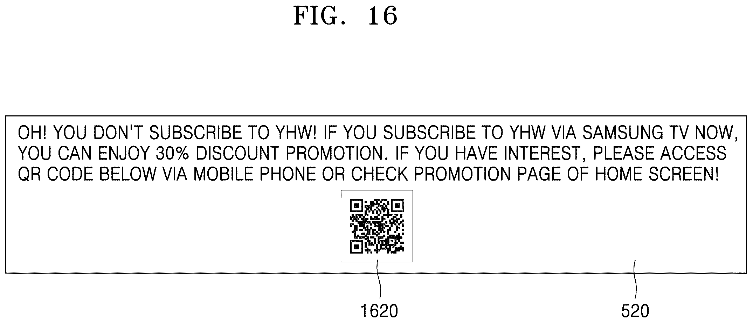

FIG. 16 illustrates a recommendation result output by the electronic device 100, according to an embodiment.

Referring to FIG. 16, the electronic device 100 may output the recommendation result received from the server 200. In an embodiment, the electronic device 100 may output at least one of an audio signal and a video signal which correspond to the recommendation result.

In an embodiment, the electronic device 100 may receive, as the recommendation result, at least one of information about a channel or content outputtable by the electronic device 100. The information about a channel or content may include metadata, a preview video, an advertisement video, a thumbnail, etc. corresponding to the channel or the content.

The electronic device 100 may identify a recommended channel or recommended content, based on metadata transmitted from the server 200 and corresponding to the recommended channel or recommended content, and may output an image, a video, related information, etc. of the identified recommended channel or recommended content via a sub-screen included in a multi-view screen. Alternatively, the electronic device 100 may output, via a sub-screen, a thumbnail of the recommended channel or recommended content transmitted from the server 200.

In an embodiment, the electronic device 100 may receive, as a recommendation result, an operation executable by the electronic device 100. The operation executable by the electronic device 100 may include information for guiding execution of an operation for a MDE.

In an embodiment, the operation executable by the electronic device 100 may include information guiding that, for example, a recommendation result recommended by the server 200 is content that may be obtained only when a particular application is executed, and when the particular application is not downloaded to the electronic device 100, the particular application has to be downloaded. Also, for example, in a case where a recommendation result recommended by the server 200 is content provided by a particular OTT service provider, and when it is unclear whether a user is a member who can use a particular OTT service, the recommendation result may include information guiding the user to perform log-in to use the particular OTT service.

Furthermore, when the particular application is a paid application or the user is not the member who can use the particular OTT service, the server 200 may include, in the recommendation result, information guiding execution of an additional operation such as payment to download the paid application, or information guiding execution of an additional operation such member registration or subscription to use the OTT service.

The server 200 may include, in the recommendation result, information guiding an operation related to an additional function executable by the electronic device 100, the information including information guiding an Internet shopping mall address link where the user may buy a particular item that the user might have interest, or information related to a paid service payment or subscription for providing paid content or a paid OTT service outputtable by the electronic device 100.

Referring to FIG. 16, the electronic device 100 may output the recommendation result in the form of a video signal via the interface screen 520. In an embodiment, the electronic device 100 may display the interface screen 520 on a part of an area of a display.

In an embodiment, the video signal corresponding to the recommendation result may include information that guides an operation related to an additional function executable by the electronic device 100. For example, as shown in FIG. 16, the video signal corresponding to the recommendation result may include a phrase that guides subscription to an OTT service referred to as the YHW.

Also, in an embodiment, the video signal corresponding to the recommendation result may include short cut information 1620 for guiding the immediate use of a particular service. The short cut information 1620 may include information such as a quick response (QR) code, an Internet address on application/website, etc.

A user may view information guiding an operation related to an additional function, the information included in the recommendation result output by the electronic device 100, and may act according to the guide. For example, the user may conveniently perform an additional function, i.e., subscription to OTT service, by using the short cut information 1620 included in the recommendation result.

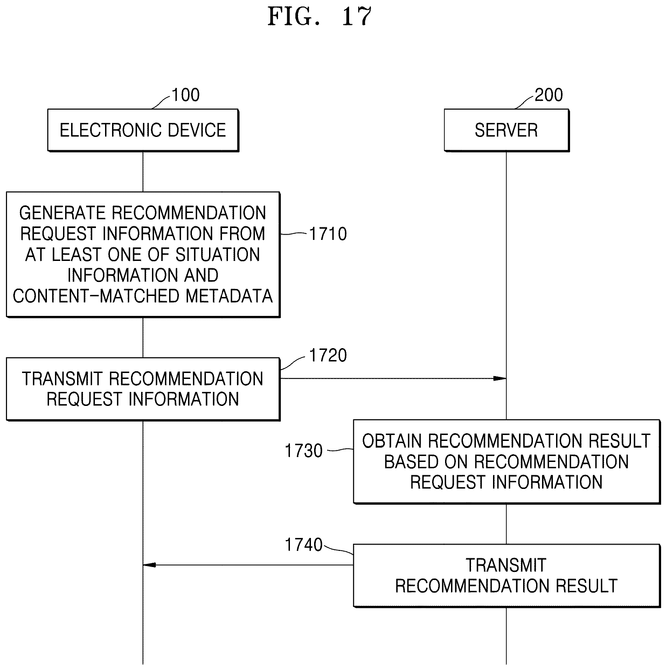

FIG. 17 is a flowchart of an operation method of the electronic device 100 and the server 200, according to an embodiment.

In an embodiment, the electronic device 100 may obtain situation information including at least one of context information of content that is currently output, user information, characteristic information, and circumstantial situation information.

In an embodiment, the electronic device 100 may obtain metadata corresponding to content including at least one of metadata corresponding to content being currently output, metadata corresponding to content not being currently output by the electronic device 100 but being outputtable, and schedule information.

In an embodiment, the electronic device 100 may generate request information from at least one of the situation information and the metadata corresponding to content (operation 1710).

In an embodiment, the request information may include input conversational text information. In an embodiment, the request information may further include auxiliary information along with the text information.

In an embodiment, the electronic device 100 may transmit the request information to the server 200 (operation 1720).

In an embodiment, the server 200 may receive the request information from the electronic device 100.

In an embodiment, the server 200 may obtain a recommendation result based on the request information (operation 1730).

In an embodiment, the server 200 may obtain the recommendation result based on the request information, based on a hyper-scale generative Al model. In an embodiment, the server 200 may obtain the recommendation result including at least one of an operation executable by the electronic device 100 and information about a channel or content outputtable by the electronic device 100. In an embodiment, the server 200 may obtain the recommendation result including a recommendation reason.

In an embodiment, the server 200 may transmit the recommendation result to the electronic device 100 (operation 1740).

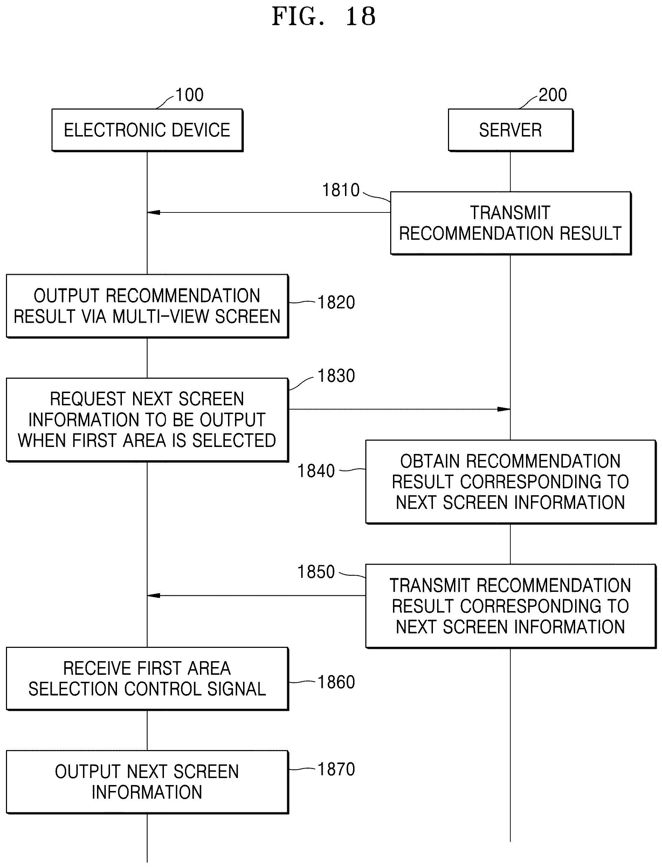

FIG. 18 is a flowchart of an operation method of the electronic device 100 and the server 200, according to an embodiment.

Referring to FIG. 18, in an embodiment, the server 200 may transmit a recommendation result to the electronic device 100 (operation 1810).

In an embodiment, the electronic device 100 may receive the recommendation result from the server 200.

In an embodiment, the electronic device 100 may output the recommendation result via a multi-view screen (operation 1820). In an embodiment, the multi-view screen may include a plurality of sub-screens.

In an embodiment, the electronic device 100 may previously request the server 200 for next screen information to be output when a first area among the plurality of sub-screens is selected (operation 1830).

In an embodiment, in response to the request from the electronic device 100, the server 200 may obtain a recommendation result corresponding to the next screen information (operation 1840).

The next screen may include a screen in which, when a user input of selecting the first area is received while first content is being output via the first area other than a center area among the plurality of areas included in the multi-view screen, the first content that has been output via the first area is output via the center area other than the first area, and information about new content or new channel is output via up, bottom, left, and right areas around the center area. The recommendation result corresponding to the next screen information may include metadata, a thumbnail image, etc. of content or channel to be output via up, bottom, left, and right sub-screens around the center sub-screen.

In an embodiment, the server 200 may transmit the recommendation result corresponding to the next screen information to the electronic device 100 (operation 1850).

In an embodiment, the electronic device 100 may receive the recommendation result corresponding to the next screen information from the server 200, and may temporarily store it in temporary memory, etc.

In an embodiment, the electronic device 100 may receive a control signal for selecting the first area (operation 1860). That is, the electronic device 100 may receive, from the control device 50, the control signal for selecting the first area of the multi-view screen or first content that is screen information being currently output via the first area (operation 1860).

In an embodiment, based on receiving a first area selection control signal for selecting the screen information being currently output via the first area, the electronic device 100 may newly configure the multi-view screen so as to allow the first content that has been output via the first area is output via the center screen. In an embodiment, based on the first area selection control signal being received, the electronic device 100 may read the recommendation result corresponding to the next screen information, which has been received by previously requesting to the server 200, and may immediately output the next screen based on the recommendation result corresponding to the next screen information (operation 1870).

For example, the electronic device 100 may read, from the temporary memory, metadata, a thumbnail image, information about them, etc. of content or channels to be output via up, bottom, left, and right sub-screens of the multi-view screen to be output as the next screen. The electronic device 100 may obtain content to be output via a sub-screen, based on a thumbnail image, metadata, etc., and may output it via the sub-screen of a multi-view screen.

However, this is merely an embodiment, and not the electronic device 100 but the server 200 may generate the next screen as a multi-view screen, and may transmit it to the electronic device 100. In this case, the electronic device 100 may store, in the temporary memory, the next screen received from the server 200, and when the first area selection control signal is received, the electronic device 100 may immediately read and output the next screen.

In an embodiment, in preparation for a case in which not only the first area but also other sub-screens, e.g., for example, a second area, a third area, and a four area, among the plurality of sub-screens include in the multi-view screen that is currently output are each selected, the electronic device 100 may previously request the server 200 for information about next screens to be output when the second to fourth areas are selected.

The server may obtain next screen information to be output when the second to fourth areas are selected, based on a generative Al model, and may transmit them to the electronic device 100. The electronic device 100 may temporarily store the next screen information in the temporary memory.

Afterward, when a user selects any one area among the second to fourth areas, the electronic device 100 may immediately read a recommendation result corresponding to the selected area from the temporary memory, and may output a screen based on the recommendation result.

An operation method of an electronic device and the device according to some embodiments may be embodied in the form of a recording medium such as a program module which include instructions executable by a computer. The computer-readable recording medium may include any usable medium that may be accessed by computers, volatile and non-volatile medium, and detachable and non-detachable medium. Also, the computer-readable recording medium may include all of a computer storage medium and a communication medium. The computer storage medium includes all volatile and non-volatile media, and detachable and non-detachable media which are technically implemented to store information including computer-readable instructions, data structures, program modules or other data. The communication medium includes computer-readable instructions, a data structure, a program module, other data as modulation-type data signals such as carrier signals, or other transmission mechanism, and includes other information transmission media.

According to an embodiment of the present disclosure, an electronic device and an operation method thereof, the operation method including transmitting, to a server, request information that is obtained from at least one of situation information and metadata corresponding to content and includes input conversational text information, and receiving, from the server, a recommendation result based on the request information, may be implemented as a computer program product including computer-readable recording medium/storage medium having recorded thereon a program for implementing the operation method of the electronic device.

A machine-readable storage medium may be provided in the form of a non-transitory storage medium. Here, the term 'non-transitory storage medium' may mean that the storage medium is a tangible device and does not include signals (e.g., electromagnetic waves), and may mean that data may be permanently or temporarily stored in the storage medium. For example, the 'non-transitory storage medium' may include a buffer in which data is temporarily stored.

According to an embodiment, the method according to various embodiments of the present disclosure may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user apparatuses (e.g., smartphones). In a case of online distribution, at least a portion of the computer program product (e.g., a downloadable application) may be at least temporarily stored or temporarily generated in a machine-readable storage medium such as a manufacturer's server, a server of an application store, or a memory of a relay server.

## Claims

1. An electronic device (100) comprising:
memory (120) storing one or more instructions; and
one or more processors (110) configured to execute the one or more instructions stored in the memory,
wherein the one or more processors are configured to
transmit, to a server (200), request information that is obtained from at least one of situation information and metadata corresponding to content, the request information including input conversational text information, and
receive, from the server, a recommendation result based on the request information.

2. The electronic device of claim 1, wherein the one or more processors are configured to transmit the request information to the server when a control signal corresponding to execution of one function among a search function, a channel change function, and a function of return to main screen is received.

3. The electronic device of claim 1 or 2, wherein the situation information comprises at least one of context information of content being currently output, user information, characteristic information, and circumstantial situation information.

4. The electronic device of any one of claims 1 to 3, wherein the metadata corresponding to content comprises at least one of metadata corresponding to content being currently output, metadata corresponding to content outputtable by the electronic device, and schedule information.

5. The electronic device of any one of claims 1 to 4, wherein
the recommendation result received from the server comprises at least one of an executable operation, an outputtable channel, or information corresponding to content, the one or more processors are configured to control at least one of an audio signal and a video signal to be output, the audio signal and the video signal corresponding to the recommendation result received from the server, and
the video signal comprises conversational text information.

6. The electronic device of claim 5, wherein, when the recommendation result is output via a multi-view screen, the one or more processors are configured to:
receive, from the server, next screen information to be output in a first area comprised in the multi-view screen, and
control output of a screen based on a recommendation result corresponding to the next screen information received from the server, when a user input of selecting screen information currently output in the first area is received.

7. A server (200) comprising:
memory (220) storing one or more instructions; and
one or more processors (210) configured to execute the one or more instructions stored in the memory,
wherein the one or more processors are configured to, when request information including input conversational text information is received from an electronic device (100), transmit, to the electronic device, a recommendation result comprising a recommendation reason that corresponds to the request information and is obtained based on one or more neural networks.

8. The server of claim 7, wherein the one or more processors are configured to
obtain at least one of additional information and user information, and
obtain the recommendation result from the one or more neural networks by inputting the request information along with at least one of the additional information and the user information to the one or more neural networks.

9. The server of claim 8, wherein
the additional information comprises at least one of metadata corresponding to content, popular content, curated content, content selected based on particular theme, and key performance index (KPI) information, and
the user information comprises at least one of setting information, a user profile, a user's viewing history information, and channel change history information.

10. The server of any one of claims 7 to 9, wherein the one or more processors are configured to obtain, as a recommendation reason, candidate information having high priority among a plurality of pieces of candidate information related to a recommendation reason, from the one or more neural networks.

11. The server of any one of claims 7 to 10, wherein
the one or more neural networks comprise a plurality of theme-specific neural networks, and
the one or more processors are configured to obtain the recommendation result from at least one of the plurality of theme-specific neural networks by inputting, to the plurality of theme-specific neural networks, information corresponding to the plurality of theme-specific neural networks obtained based on the request information.

12. The server of any one of claims 7 to 11, wherein the recommendation result further comprises information corresponding to an additional function executable by the electronic device.

13. An operation method of an electronic device, the operation method comprising:
transmitting, to a server, request information that is obtained from at least one of situation information and metadata corresponding to content, the request information including input conversational text information; and
receiving, from the server, a recommendation result based on the request information.

14. The operation method of claim 13, wherein the transmitting of the request information to the server comprises transmitting the request information to the server, when a control signal corresponding to execution of one function among a search function, a channel change function, and a function of return to main screen is received.

15. The operation method of claim 13 or 14, further comprising outputting at least one of an audio signal and a video signal which correspond to the recommendation result, and
wherein the video signal comprises conversational text information.
